(19) Europäisches Patentamt
European Patent Office
Office européen des brevets

(11) Veröffentlichungsnummer: **0 010 143**
**B1**

(12) **EUROPÄISCHE PATENTSCHRIFT**

(45) Veröffentlichungstag der Patentschrift: **28.09.83**

(21) Anmeldenummer: **79103176.8**

(22) Anmeldetag: **28.08.79**

(51) Int. Cl.³: **A 01 N 25/32,**
A 01 N 55/04, C 07 F 7/22

# (54) Oxim-Derivate zum Schutz von Pflanzenkulturen.

(30) Priorität: **31.08.78 CH 9200/78**

(43) Veröffentlichungstag der Anmeldung:
**30.04.80 Patentblatt 80/9**

(45) Bekanntmachung des Hinweises auf die Patenterteilung:
**28.09.83 Patentblatt 83/39**

(84) Benannte Vertragsstaaten:
**AT BE CH DE FR GB IT NL**

(56) Entgegenhaltungen:
**DE - B - 1 567 075**
**FR - A - 2 322 861**
**US - A - 3 210 245**
**US - A - 3 275 659**

**CHEMICAL ABSTRACTS, Band 69, Nr. 13, 23. September 1968, Zusammenfassung Nr. 52304w, Columbus, Ohio, US**

**CHEMICAL ABSTRACTS, Band 69, Nr. 11, 9. September 1968, Zusammenfassung Nr. 44022n, Columbus, Ohio, US**

(73) Patentinhaber: **CIBA-GEIGY AG**
**Patentabteilung Postfach**
**CH-4002 Basel (CH)**

(72) Erfinder: **Martin, Henry, Dr.**
**Jupiterstrasse 17**
**CH-4123 Allschwil (CH)**

(74) Vertreter: **Zumstein, Fritz sen., Dr. et al,**
**Bräuhausstrasse 4**
**D-8000 München 2 (DE)**

(56) Entgegenhaltungen:
**CHEMICAL ABSTRACTS, Band 72, Nr. 23, 8 Juni 1970, Zusammenfassung Nr. 120485v, Columbus, Ohio, US**

**DERWENT JAPANESE PATENTS REPORT Band 6, Nr. 45, 18. Dezember 1967, General Organic, Seite 4, London, GB**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 010 143 B1

# Oxim-Derivate zum Schutz von Pflanzenkulturen

Die vorliegende Erfindung betrifft Mittel zum Schutz von Pflanzenkulturen, die als aktive Komponenten Oxim-Derivate der Formel I

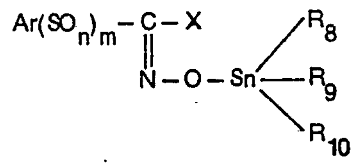

(I)

enthalten,

worin n = 0, 1 oder 2 und m = 0 oder 1 ist, X Cyano oder einen Carbonsäureniederalkylester bedeutet, Ar für Phenyl, durch 1 bis 4 Niederalkylgruppen, 1 bis 4 Niederalkoxygruppen oder 1 bis 4 Halogenatome substituiertes Phenyl, Naphthyl oder, wenn m = 0 ist, auch für Aminocarbonyl ($—CONH_2$) steht und $R_8$, $R_9$ und $R_{10}$ gleich sind und $C_1—C_4$-Alkyl, Benzyl oder Phenyl bedeuten, mit der Massgabe, dass, wenn Ar für Phenyl steht, X Cyano und i) n = 2 und m = 1 sind und $R_8$, $R_9$ und $R_{10}$ n-Butyl bedeuten oder ii) n und m = 0 sind und $R_8$, $R_9$ und $R_{10}$ Phenyl bedeuten.

Niederalkyl allein oder als Teil eines anderen Substituenten bedeutet $C_1—C_4$ Alkyl. Beispiele sind Methyl, Aethyl, Propyl, Isopropyl, Butyl, Isobutyl, sec. Butyl und tert.Butyl.

Die Verbindungen der Formel I können hergestellt werden, indem man eine Verbindung der Formel (II)

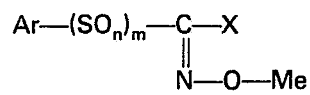

(II)

mit dem gewünschten Zinnhalogenid der Formel (III)

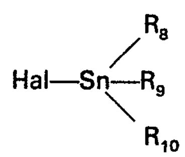

(III)

umsetzt, wobei Ar, $R_8$, $R_9$, $R_{10}$, X, m und n die unter Formel (I) angegebenen Bedeutungen haben, Me für Wasserstoff oder ein Kation, vorzugsweise das Kation eines Alkali- oder Erdalkalimetalls steht und Hal Halogen, vorzugsweise Chlor oder Brom bedeutet (vgl. Organic Reactions 1953, Vol. *7*, Seite 343 und 373; Journal & prakt. Chemie *66,* S. 353; Liebigs Ann. *250,* 165)

Als Lösungsmittel zur Gewinnung der Verbindungen der Formel (I) eignen sich prinzipiell alle Vertreter, die sich unter den Bedingungen der Reaktion indifferent verhalten. Beispielsweise Kohlenwasserstoffe, vor allem aber polare Lösungsmittel wie Acetonitril, Dioxan, Cellosolve® (2-Aethoxyäthanol), Dimethylformamid, aber auch Ketone wie Methyläthylketon, Aceton usw.. Hydroxylgruppenhaltige Lösungsmittel sind ausgeschlossen.

Die Temperaturen liegen im Bereich von −10° C bis ca. 150° C, bevorzugt zwischen 20° und 120°C.

In den Fällen, wo in der Formel (II) Me für Wasserstoff steht, wird das Verfahren in Gegenwart einer Base durchgeführt. Beispiele solcher Basen sind anorganische Basen wie die Oxide, Hydroxide, Hydride, Carbonate und Hydrogencarbonate von Alkali und Erdalkalimetallen sowie z.B. tert. Amine wie Triäthylamin, Triäthylendiamin, Piperidin, Pyridin usw.

Das Verfahren bildet auch einen Teil der Erfindung.

Die Verbindungen der Formel (I) können für sich allein oder zusammen mit geeigneten Trägern und/oder anderen Zuschlagstoffen verwendet werden. Geeignete Träger und Zuschalgstoffe können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Binde- oder Düngemitteln.

Der Gehalt an Wirkstoff in handelsfähigen Mitteln liegt zwischen 0,1 bis 90%.

Zur Applikation können die Verbindungen der Formel (I) in den folgenden Aufarbeitungsformen vorliegen (wobei die Gewichts-Prozentangaben in Klammern vorteilhafte Mengen an Wirkstoff darstellen):

Feste Aufarbeitungsformen: Stäubemittel und Streumittel (bis zu 10%) Granulate, Umhüllungsgranulate, Imprägnierungsgranulate und Homogengranulate, Pellets (Körner) (1 bis 80%);

Flüssige Aufarbeitungsformen:

a) in Wasser dispergierbare Wirkstoffkonzentrate:
Spritzpulver (wettable powders) und Pasten (25—90% in der Handelspackung, 0,01 bis 15% in gebrauchsfertiger Lösung);
Emulsions- und Lösungskonzentrate (10 bis 50%; 0,01 bis 15% in gebrauchsfertiger Lösung);
b) Lösungen (0,1 bis 20%; Aerosole.

Solche Mittel gehören ebenfalls zur Erfindung.

Oxime der Formel (I) eignen sich hervorragend, Kulturpflanzen wie Reis, Mais, Getreidearten (Kulturhirse, Weizen, Roggen, Gerste, Hafer), vor dem Angriff von Herbiziden verschiedenster Stoffklassen zu schützen, sofern diese nicht oder nicht genügend selektiv wirken, also neben den zu bekämpfenden Unkräutern auch die Kulturpflazen mehr oder weniger schädigen.

Als Gegenmittel oder Antidote sind schon verschiedene Stoffe vorgeschlagen worden, welche befähigt sind, die schädigende Wirkung eines Herbizides auf die Kulturpflanze spezifisch zu antagonisieren, d.h. die Kulturpflanze zu schützen, ohne dabei die Herbizidwirkung auf die zu bekämpfenden Unkräuter merklich zu beeinflussen. Dabei kann ein solches Gegenmittel, auch Safener genannt, je nach seinen Eigenschaften zur Vorbehandlung des Saatgutes der Kulturpflanze (Beizung des Samens oder der Stecklinge) oder vor der Saat in die Saatfurchen oder als Tankmischung für sich allein oder zusammen mit dem Herbizid vor oder nach dem Auflaufen der Pflanzen verwendet werden. Vorauflauf-Behandlung schliesst sowohl die Behandlung der Anbaufläche vor der Aussaat (ppi = "pre plant incorporation") aus auch die Behandlung der angesäten, aber noch nicht bewachsenen Anbauflächen ein.

So beschreibt die GB—PS 1'227'557 die Behandlung von Samen bzw. Sprösslingen von Weizen und Sorghum mit gewissen Oxamsäureestern und Amiden vor dem Angriff durch N-Methoxymethyl-2',6'-diäthyl-chloracetanilid (Alachlor).

Andere Literaturstellen (DE—OS 1'952'910, DE—OS 2'245'471, FR—PS 2'021'611) schlagen Gegenmittel zur Behandlung von Getreide, Maisund Reis-Samen zum Schutz gegen den Angriff herbizider Thiolcarbamate vor. In der DE—PS 1'576'676 und der US—PS 3'131'509 werden Hydroxyamino-acetanilide und Hydantoine für den Schutz von Getreidesamen gegenüber Carbamaten wie IPC (N-Phenyl-isopropylcarbamat), CIPC (N-3-Chlorphenyl-isopropylcarbamat) etc. vorgeschlagen. In der weiteren Entwicklung haben sich alle diese Präparate jedoch als ungenügend er wiesen.

Ueberraschenderweise besitzen Oxime der Formel (I) die Eigenschaft, Kulturpflanzen vor dem Angriff von Herbiziden der verschiedensten Stoffklassen, darunter 1,3,5-Triazinen, 1,2,4-Triazinonen, Phenylharnstoffderivaten, Carbamaten, Thiolcarbamaten, Phenoxyessigsäureestern, Phenoxypropionsäureestern, Halogenacetaniliden, Halogenphenoxyessigsäureestern, substituierten Phenoxyphenoxyessigsäureestern und -propionsäureestern, substituierten Pyridinoxyphenoxy-essigsäureestern und -propionsäureestern, Benzoesäurederivaten usw. zu schützen, sofern diese nicht oder ungenügend kulturentolerant sind.

Ein solches Gegenmittel oder Antidote der Formel (I) kann je nach Anwendungszweck zur vorbehandlung des Saatgutes der Kulturpflanze (Beizung des Samens oder der Stecklinge) eingesetzt oder vor oder nach der Saat in den Erdboden gegeben werden oder aber für sich allein oder zusammen mit dem Herbizid vor oder nach dem Auflaufen der Pflanzen appliziert werden. Die Behandlung der Pflanze oder des Saatgutes mit dem Antidote kann daher grundsätzlich unabhängig vom Zeitpunkt der Applikation der phytotoxischen Chemikalie erfolgen. Sie kann jedoch auch gleichzeitig durchgeführt werden (Tankmischung). Vorauflauf-Behandlung schliesst sowohl die Behandlung der Anbaufläche vor der Aussaat (ppi = "pre plant incorporation") als auch die Behandlung der angesäten, aber noch nicht bewachsenen Anbauflächen ein.

Die Aufwandmengen des Antidotes im Verhältnis zum Herbizid richten sich weitgehend nach der Anwendungsart. Sofern eine Feldbehandlung vorgenommen wird, verhalten sich die Mengen von Antidote der Formel (I) zu phytotoxischer Chemikalie wie 1:100 bis 5:1, bevorzugt 1:20 bis 1:1. Bei Samenbeizung und ähnlichen gezielten Schutzmassnahmen werden jedoch weit geringere Mengen Antidote im Vergleich mit den z.B. später pro Hektar Anbaufläche verwendeten Herbizidmengen benötigt (z.B. ca. 1:3000 bis 1:1000). In der Regel stehen protektive Massnahmen wie Samenbeizung mit einem Antidote der Formel (I) und mögliche spätere Feldbehandlung mit Agrarchemikalien nur in losem Zusammenhang. Vorbehandeltes Saat- und Pflanzengut kann später in Landwirtschaft, Gartenbau und Forstwirtschaft mit unterschiedlichen Chemikalien in Berührung kommen.

Die Erfindung bezieht sich daher auch auf kulturpflanzenprotektive Mittel, welche diese Oximäther der Formel I zusammen mit Herbiziden enthalten, sowie Mittel, welche diese Oximäther der Formel I als einzige Aktivkomponente enthalten. Pflanzenschutzmittel, die ein Gegenmittel der Formel I (auch Antidote oder Safener genannt) enthalten, können ohne gleichzeitige Anwesenheit des abzuschwächenden Herbizids (oder einer anderen aggressiven Agrarchemikalie) hergestellt, in den Handel gebracht oder verwendet werden. Eine wichtige Anwendungsmöglichkeit ist die Saatbeizung, die zu einem von der Anwendung des Herbizids ganz unabhängigen Zeitpunkt vorgenommen wird. Ein anderes Einsatzgebiet ist die Behandlung eines Bodens, in dem noch Reste eines Herbizids der letzten Anbausaison vorhanden sind, das die vorgesehene neue Pflanzenkultur schädigen könnte.

Die Antidote-Eigenschaft ist eine von der Kulturpflanze und von dem in der Wirkung selektiv abzuschwächenden Herbizid unabhängige Stoffeigenschaft, die einem Präparat der Formel I inhärent ist, jedoch erst beim Zusammenwirken der 3 Komponenten Antidote-Herbizid-Pflanze sichtbar zu Tage tritt.

Aehnlich einer pestizid wirkenden Chemikalie, deren Pestizid-Wirkung erste bei Anwesenheit eines Schädlings sichtbar wird, erfordert auch der Nachweis der Safener-Wirkung die Anwesenheit der an der Wirkung beteiligten anderen beiden Komponenten, nämlich des Herbizids und der Kulturpflanze. Dies unterscheidet ein formuliertes Safener-Mittel von einem synergistisch wirkenden Zwei- oder Dreikomponentengemisch, bei dem gleichzeitig alle Wirkstoffkomponenten vorliegen und sämtlich in die gleiche Wirkungsrichtung zielen. Als Kulturpflanzen seien im Rahmen vorliegender Erfindung alle Pflanzen, die in irgendeiner Form Ertragsstoffe produzieren (Samen, Wurzeln, Stengel, Knollen, Blätter, Blüten, Inhaltsstoffe wie Oele, Zucker, Stärke, Eiweiss etc.) und zu diesem Zweck angebaut und gehegt werden. Zu diesen Pflanzen gehören beispielsweise sämtliche Getreidearten, Mais, Reis, Edelhirse, Soja, Bohnen, Erbsen, Kartoffeln, Gemüse, Baumwolle, Zuckerrüben, Zuckerrohr, Erdnüsse, Tabak, Hopfen, dann jedoch auch Zierpflanzen, Obstbäume sowie Bananen-, Kakao- und Naturkautschuk-Gewächse. Diese Aufzählung stellt keine Limitierung dar. Grundsätzlich lässt sich ein Antidote überall dort einsetzen, wo eine Kulturpflanze vor der Phytotoxizität einer Chemikalie geschützt werden soll.

Die Erfindung bezieht sich auf ein Verfahren zum Schutz von Kulturpflanzen vor Herbiziden, indem ein als Antidote wirkendes Oximderivat der Formel (I) wahlweise vor oder nach Applikation des Herbizids oder auch gleichzeitig mit dem Herbizid angewendet wird.

Organozinnoxim-Derivate mit andersartiger Struktur sind aus den US—Patenten 3,275,659; 3,282,672, 3,419,662; 3,210,245 und den japanischen Anmeldungen 67/23256, 67/24573, 67/26296 und 69/31222 bekannt. Eine Wirkung als Gegenmittel oder Antidot wird darin nicht beschrieben.

Die Verbindungen der Formel I bilden ebenfalls einen Gegenstand der Erfindung.

Bevorzugt sind Oxim-Derivate der Formel I, in denen X Cyano bedeutet, Ar für durch 1 bis 4 Niederalkylgruppen, 1 bis 4 Niederalkoxygruppen oder 1 bis 4 Halogenatome substituiertes Phenyl oder, wenn $m = 0$ ist, auch für Aminocarbonyl steht und $R_8$, $R_9$ und $R_{10}$ gleich sind und n-Butyl oder Phenyl bedeuten.

Besonders interessante Einzelverbindungen sind:

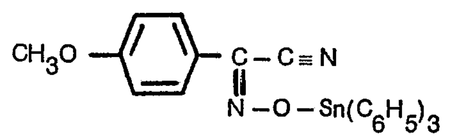 ;

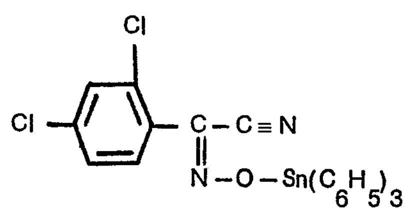 ;

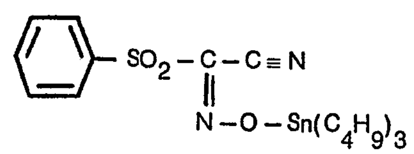 ;

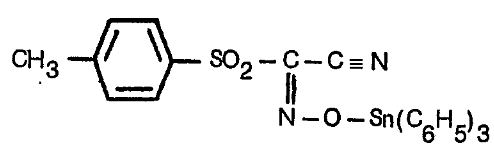 ;

Die bevorzugten Verbindungsgruppen und Einzelverbindungen, Mittel, die sie enthalten, sowie ihre Verwendung zum Schutz von Kulturpflanzen aggressiven Agrarchemikalien bilden auch einen Teil der Erfindung.

Von den Mitteln, welche ein Oxim-Derivat und ein Herbizid enthalten, sind insbesondere die folgenden erwähnenswert:

a) 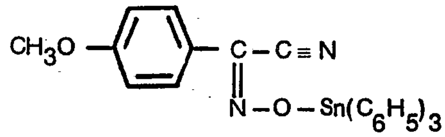 und

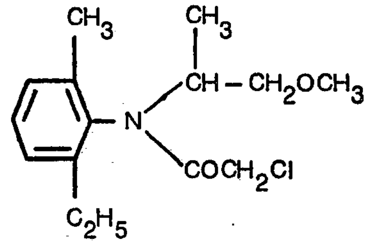 ;

b) 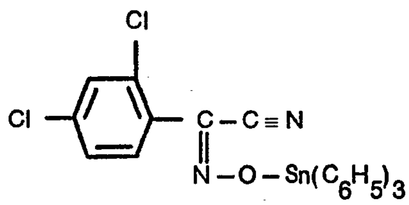 und

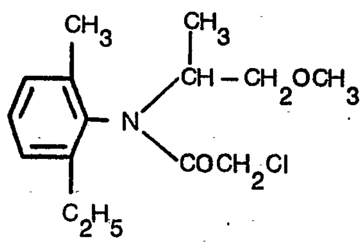 ;

c) 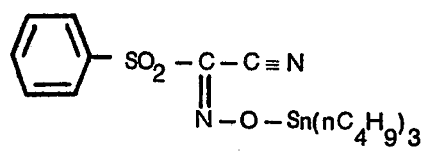 und

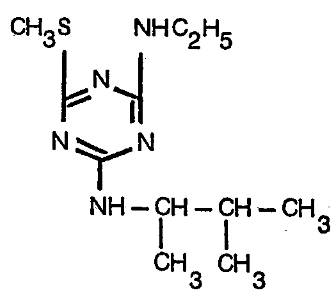 ;

d) 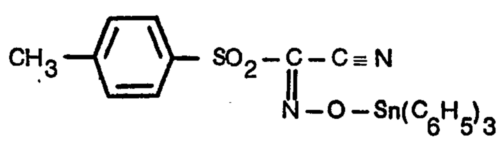 und

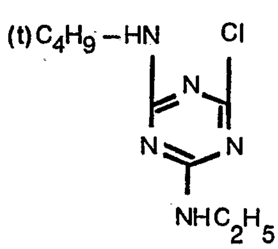 oder 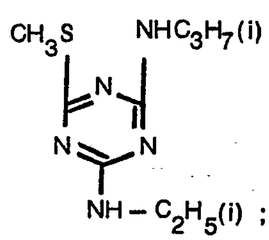 und ;

e) 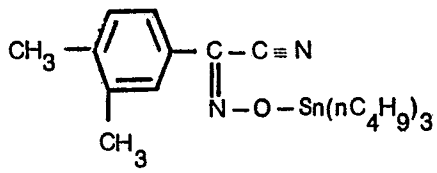 und

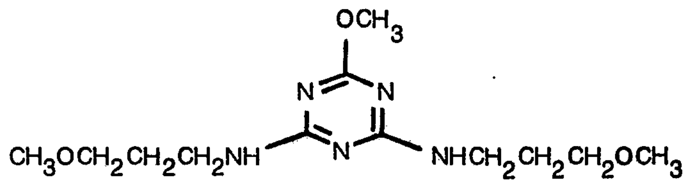

Die nachfolgenden Beispiele dienen zur näheren Erläuterung der Erfindung ohne dieselbe einzuschränken. Die Temperaturen sind in Celsiusgraden, die Druckangaben in Millibar angegeben. Prozente und Teile beziehen sich auf das Gewicht.

*Herstellungsbeispiel*

Beispiel 1

Herstellung von

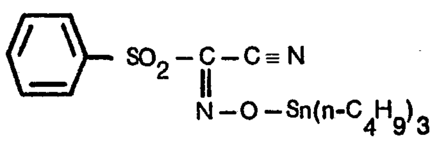

11,6 g (0,05 Mol) des Natriumsalzes von $\alpha$-Phenylsulfonyl-oximino-acetonitril und 16,3 g (0,05 Mol) Tri-n-butylzinnchlorid wurden in 50 ml Acetonitril gelöst und während 2 Stunden bei 40 bis 50° gerührt. Die Lösung wurde derauf unter Vakuum bei ca. 50° eingedampft und der Rückstand mit Wasser und Methylenchlorid gerührt, bis zwei sich trennende Phasen entstanden. Die Methylenchlorid-phase wurde abgetrennt und nach dem Trocknen über Natriumsulfat eingedampft. Das Endprodukt wurde als braunes Oel $n_{22}^{D}$ 1,5395 erhalten.

Beispiel 2

Herstellung von

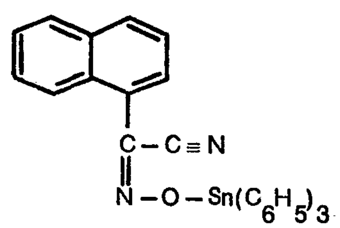

5,5 g (0,025 Mol) des Natriumsalzes von $\alpha$-Naphth-1-yl-oximinoacetonitril und 9,6 g (0,025 Mol) Triphenylzinnchlorid wurden in 50 ml Acetonitril gelöst und während 4 Stunden unter Rückfluss gekocht. Die feine Suspension wurde darauf eingedampft, der Rückstand in Methylenchlorid aufgenommen und das Salz abfiltriert. Das Filtrat wurde eingedampft und ergab das Endprodukt. FP. 176 bis 179°.

Beispiel 3

Herstellung von

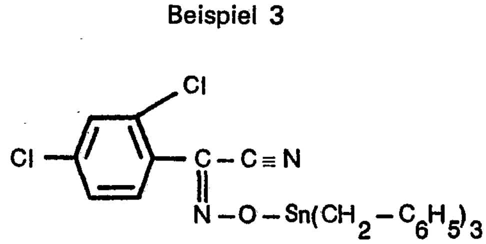

7,1 g (0,03 Mol) des Natriumsalzes von 2,4-Dichlor-phenyl-oximino-acetonitril und 14,2 g Tribenzylzinnchlorid wurden in 50 ml Acetonitril gelöst und während 4 Stunden unter Rückfluss gekocht. Die feine Suspension wurde darauf eingedampft, der Rückstand in Methylenchlorid aufgenommen und das Salz abfiltriert. Das Filtrat wurde eingedampft und ergab das Endprodukt als Oel, welches nach längerem Stehen kristallisierte. Fp. 89 bis 93°.

Auf analoge Weise können die nachfolgenden Verbindungen der Formel (I) hergestellt werden.

TABELLE I

Ar = 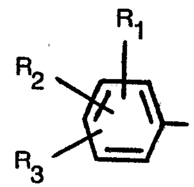

| Verbindung Nr. | $R_1$ | $R_2$ | $R_3$ | X | n | m | $R_8$ | $R_9$ | $R_{10}$ | physikalische Daten |
|---|---|---|---|---|---|---|---|---|---|---|
| 1 | H | H | H | CN | – | 0 | $C_6H_5$ | $C_6H_5$ | $C_6H_5$ | Fp. 136 – 139° |
| 2 | 4–Cl | H | H | CN | – | 0 | $CH_2C_6H_5$ | $CH_2C_6H_5$ | $CH_2C_6H_5$ | Fp. 120 – 125° |
| 3 | 4–t–$C_4H_9$ | H | H | CN | – | 0 | $C_4H_9$(n) | $C_4H_9$(n) | $C_4H_9$(n) | $n_{22}^{D}$ 1,5347 |
| 4 | 4–$CH_3$ | H | H | CN | – | 0 | $C_4H_9$(n) | $C_4H_9$(n) | $C_4H_9$(n) | $n_{22}^{D}$ 1,5417 |
| 5 | 4–$CH_3$ | H | H | CN | – | 0 | $C_6H_5$ | $C_6H_5$ | $C_6H_5$ | Fp. 127 – 131° |
| 6 | 4–$OCH_3$ | H | H | CN | – | 0 | $C_4H_9$(n) | $C_4H_9$(n) | $C_4H_9$(n) | $n_{22}^{D}$ 1,5483 |
| 7 | 4–$OCH_3$ | H | H | CN | – | 0 | $C_6H_5$ | $C_6H_5$ | $C_6H_5$ | Fp. 119 – 122° |
| 8 | 4–$OCH_3$ | H | H | CN | – | 0 | $CH_2C_6H_5$ | $CH_2C_6H_5$ | $CH_2C_6H_5$ | Harz |
| 9 | 2–Cl | 4–Cl | H | CN | – | 0 | $CH_2C_6H_5$ | $CH_2C_6H_5$ | $CH_2C_6H_5$ | Fp. 89 – 93° |
| 10 | 3–Cl | 4–Cl | H | CN | – | 0 | $CH_2C_6H_5$ | $CH_2C_6H_5$ | $CH_2C_6H_5$ | Fp. 90 – 95° |
| 11 | 4–Br | H | H | CN | – | 0 | $C_4H_9$(n) | $C_4H_9$(n) | $C_4H_9$(n) | Harz |

TABELLE 1 (Continued)

| Verbindung Nr. | $R_1$ | $R_2$ | $R_3$ | X | n | m | $R_8$ | $R_9$ | $R_{10}$ | physikalische Daten |
|---|---|---|---|---|---|---|---|---|---|---|
| 12 | 4–Br | H | H | CN | – | 0 | $C_6H_5$ | $C_6H_5$ | $C_6H_5$ | Fp. 134 – 138° |
| 13 | 4–Cl | H | H | CN | – | 0 | $C_6H_5$ | $C_6H_5$ | $C_6H_5$ | Fp. 135 – 139° |
| 14 | 4–Cl | H | H | CN | – | 0 | $C_4H_9$(n) | $C_4H_9$(n) | $C_4H_9$(n) | Oel |
| 15 | 2–Cl | 4–Cl | H | CN | – | 0 | $C_4H_9$(n) | $C_4H_9$(n) | $C_4H_9$(n) | wachsartig |
| 16 | 2–Cl | 4–Cl | H | CN | – | 0 | $C_6H_5$ | $C_6H_5$ | $C_6H_5$ | Fp. 138 – 139° |
| 17 | H | H | H | CN | 2 | 1 | $C_4H_9$(n) | $C_4H_9$(n) | $C_4H_9$(n) | $n_{22}^{D}$ 1,5995 |
| 18 | 4–$CH_3$ | H | H | CN | 2 | 1 | $C_4H_9$(n) | $C_4H_9$(n) | $C_4H_9$(n) | $n_{22}^{D}$ 1,5392 |
| 19 | 4–$CH_3$ | H | H | CN | 2 | 1 | $C_6H_5$ | $C_6H_5$ | $C_6H_5$ | Harz |
| 20 | 2–F | H | H | CN | – | 0 | $C_6H_5$ | $C_6H_5$ | $C_6H_5$ | |
| 21 | 3–$CH_3$ | 4–$CH_3$ | H | CN | – | 0 | $C_4H_9$(m) | $C_4H_9$(n) | $C_4H_9$(n) | Oel |
| 22 | 4–Cl | H | H | CN | 2 | 1 | $C_4H_9$(n) | $C_4H_9$(n) | $C_4H_9$(n) | $n_{20}^{D}$ 1,5470 |
| 23 | 4–t–$C_4H_9$ | H | H | CN | – | 0 | $CH_2$–$C_6H_5$ | $CH_2$–$C_6H_5$ | $CH_2$–$C_6H_5$ | |

TABELLE I (Continued)

| Verbindung Nr. | Ar | X | n | m | $R_8$ | $R_9$ | $R_{10}$ | physikalische Daten |
|---|---|---|---|---|---|---|---|---|
| 24 | 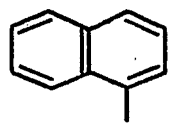 | CN | – | 0 | $C_4H_9$(n) | $C_4H_9$(n) | $C_4H_9$(n) | Fp. 74 – 77° |
| 25 | 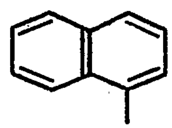 | CN | – | 0 | $C_6H_5$ | $C_6H_5$ | $C_6H_5$ | Fp. 176 – 179° |
| 26 | $NH_2CO$ | CN | – | 0 | $C_4H_9$(n) | $C_4H_9$(n) | $C_4H_9$(n) | Oel |
| 27 | $NH_2CO$ | CN | – | 0 | $C_6H_5$ | $C_6H_5$ | $C_6H_5$ | Harz |

*Formulierungsbeispiele*

Beispiel 4

*Stäubemittel:* Zur Herstellung eines a) 5%igen und b) 2%igen Stäubemittels werden die folgenden Stoffe verwendet:

a) 5 Teile Wirkstoff
95 Teile Talkum;
2 Teile Wirkstoff
1 Teil hochdisperse Kieselsäure,
97 Teile Talkum;

Die Wirkstoffe werden mit den Trägerstoffen vermischt und vermahlen und können in dieser Form zur Anwendung verstäubt werden.

Beispiel 5

*Granulat:* Zur Herstellung eines 5%igen Granulates werden die folgenden Stoffe verwendet:

5 Teile Wirkstoff
0,25 Teile Epichlorhydrin,
0,25 Teile Cetylpolyglykoläther,
3,50 Teile Polyäthylenglykol
91 Teile Kaolin (Korngrösse 0,3—0,8 mm).

Die Aktivsubstanz wird mit Epichlorhydrin vermischt und mit 6 Teilen Aceton gelöst, hierauf wird Polyäthylenglykol und Cetylpolyglykoläther zugesetzt. Die so erhaltene Lösung wird auf Kaolin aufgesprüht, und anschliessend wird das Aceton im Vakuum verdampft.

Beispiel 6

*Spritzpulver:* Zur Herstellung eines a) 70 %igen b) 40 %igen, c) und d) 25 %igen, 3) 10 %igen Spritzpulvers werden folgende Bestandteile verwendet:

a) 70 Teile Wirkstoff
5 Teile Natriumdibutylnaphthylsulfonat,
3 Teile Naphthalinsulfonsäuren-Phenolsulfonsäuren-Formaldehyd-Kondensat 3:2:1,
10 Teile Kaolin
12 Teile Champagne-Kreide;

b) 40 Teile Wirkstoff
5 Teile Ligninsulfonsäure-Natriumsalz,
1 Teil Dibutylnaphthalinsulfonsäure-Natriumsalz,
54 Teile Kieselsäure;

c) 25 Teile Wirkstoff
4,5 Teile Calcium-Ligninsulfonat,
1,9 Teile Champagne-Kreide Hydroxyäthylcellulose-Gemisch (1:1),
1,5 Teile Natrium-dibutyl-naphthalinsulfonat,
19,5 Teile Kieselsäure,
19,5 Teile Champagne-Kreide,
28,1 Teile Kaolin;

d) 25 Teile Wirkstoff,
2,5 Teile Isooctylphenoxy-polyoxyäthylen-äthanol,
1,7 Teile Champagne-Kreide Hydroxyäthylcellulose-Gemisch (1:1),
8,3 Teile Natriumaluminiumsilikat,
16,5 Teile Kieselgur,
46 Teile Kaolin;

e) 10 Teile Wirkstoff,
3 Teile Gemisch der Natriumsalze von gesättigten Fettalkoholsulfaten,
Teile Naphthalinsulfonsäure Formaldehyd-Kondensat,
82 Teile Kaolin;

Die Wirkstoffe werden in geeigneten Mischern mit den Zuschlagstoffen innig vermischt und auf entsprechenden Mühlen und Walzen vermahlen. Man erhält Spritzpulver von vorzüglicher Benetzbarkeit und Schwebefähigkeit, die sich mit Wasser zu Suspensionen der gewünschten Konzentration verdünnen und insbesondere zur Saatbeize und Tauchbehandlung von Pflanzenteilen verwenden lassen.

Biespiel 7

Emulgierbare Konzentrate

Zur Herstellung eines 25 %igen emulgierbaren Konzentrates werden folgende Stoffe verwendet:

25 Teile Wirkstoff,
2,5 Teile epoxydiertes Pflanzenöl,
10 Teile eines Alkylarlysulfonat Fettalkoholpolyglykoläther-Gemisches,
5 Teile Dimethylformamid,
57,5 Teile Xylol.

Aus solchen Konzentraten können durch Verdünnen mit Wasser Emulsionen der gewünschten Anwendungskonzentration hergestellt werden, die besonders zur Behandlung von Pflanzenteilen geeignet sind.

*Biologisches Beispiel*

Beispiel 8

Vorauflauf-Antidote-Test

*Allgemeine Methodik:*

Kleine Blumentöpfe (oberer $\phi$ 6 cm) werden mit Gartenerde gefüllt, in die die Pflanzenkultur eingesät, bedeckt und leicht festgedrückt wird. Dann wird die als Antidote zu prüfende Substanz als (aus einem Spritzpulver erhaltene) verdünnte Lösung in einer Menge aufgesprüht, die 4 kg AS/ha entspricht. Unmittelbar danach wird in entsprechender Weise das Herbizid aufgesprüht. Nach 18 Tagen Stehen bei ca. 20—23°C und 60—70 % relativer Luftfeuchtigkeit wird nach einer linearen Skala von 1 bis 9 ausgewertet, wobei 1 totale Pflanzenschädigung und 9 unbeeinträchtigter Gesundheitszustand bedeuten. Als Kontrolle dienen Pflanzen ohne Antidote-Schutz.

Es wurden verwendet:

1) 1,5 kg AS/ha $\alpha$-[4-(p-Trifluormethylphenoxy)-phenoxy]-propionsäure-n-butoxyäthylester in *Mais* der Sorte "Orla 264".

2) 1,5 kg AS/ha Metolachlor = N-(1-Methyl-2-methoxyäthyl)-N-chloracetyl-2-äthyl-6-methylanilin in *Sorghum-Hirse* der Sorte "Funk G—522".

3) 2,0 kg AS/ha Prometryn = 2,4-bis(Isopropylamino)-6-methylthio-s-triazin in *Soja*

4) 2,0 kg AS/ha 4-Aethylamino-6-tert.butylamino-2-chlor-s-triazin in *Weizen* der Sorte "Farnese".

5) 4,0 kg AS/ha Prometryn = 2,4-bis(Isopropylamino)-6-methylthio-s-triazin in *Sorghum-Hirse* der Sorte "Funk G—522".

6) 2,0 kg AS/ha $\alpha$-[4-(p-Trifluormethylphenoxy)-phenoxy]-propionsäure-n-butoxyäthylester in *Gerste* der Sorte "Mazurka".

Mit den Verbindungen der Formel I erhält man folgendes Resultat:

| Testvariante | Verbindung Nr. | Note des Herbizideinflusses (ohne/mit Antidote) |
|---|---|---|
| 1 | 2 | 3/5 |
| 3 | 2 | 5/7 |
| 3 | 8 | 5/7 |
| 3 | 9 | 5/7 |
| 3 | 10 | 5/7 |
| 3 | 17 | 3/5 |
| 2 | 18 | 2/5 |
| 5 | 22 | 1/3 |
| 3 | 26 | 2/5 |

Beispiel 9

Antidote-Wirkung an verpflanztem Reis bei getrennter Applikation (Antidote-Vorauflauf. Herbizid-Nachauflauf)

Plastiktöpfe (8 x 8 cm, 10 cm Höhe) werden bis 2 cm unter den Rand mit Erde im sumpfignassen Zustand gefüllt. Die als Antidote zu prüfende Substanz wird in verdünnter Lösung und in einer Menge auf die Oberfläche gesprüht, die 4 kg As/ha entspricht. Reispflanzen der Sorte "IR—8" werden im 1 1/2- bis 2-Blattstadium in die so vorbereiteten Töpfe verpflanzt. Am nächsten Tag wird der Wasserstand auf ca. 1,5 cm erhöht. 4 Tage nach Verpflanzung werden umgerechnet 0,75 kg AS/ha von 2-Aethylamino-4-(1,2-dimethyl-n-propylamino)-6-methylthio-s-triazin in Granulatform ins Wasser gegeben. Die Temperatur beträgt während der Versuchsdauer 26 bis 28°C, die relative Luftfeuchtigkeit 60 bis 80 %. 20 Tage nach Herbizidbehandlung wird nach einer linearen Skala von 1 bis 9 ausgewertet, wobei 1 totale Pflanzenschädigung und 9 unbeeinträchtigter Gesundheitszustand bedeuten. Als Kontrolle dienen Pflanzen ohne Antidote-Schutz.

Mit den Verbindungen der Formel I wurden folgende Resultate erzielt.

| Verbindung Nr. | Note des Herbizideinflusses (ohne/mit Antidote) |
|---|---|
| 17 | 4/7 |

Beispiel 10

Vorauflauf-Antidote-Test in Nährlösung

Es wird eine Hewitt-Nährlösung hergestellt, die die nachstehend angegebene Menge Herbizid sowie 10 ppm des zu prüfenden Antidotes enthält.

Man verwendet Kultursamen, der in der angegebenen Prüfkonzentration von dem eingesetzten Herbizid erwartungsgemäss geschädigt werden sollte und sät ihn in gekörntes Zonolith® (= expandiertes Vermikulit), das sich in einem an der Unterseite durchlöcherten Plastik-Blumentopf (oberer ⌀ 6 cm) befindet. Dieser wird in einen zweiten durchsichtigen Plastik-Blumentopf (oberer ⌀ 7 cm) gestellt, in dem sich ca. 50 ml der mit Herbizid und Antidote vorbereiteten Nährlösung befinden, die nunmehr kapillar im Füllmaterial des kleineren Topfes aufsteigt und Samen und keimende Pflanze benetzt. Täglich wird der Flüssigkeitsverlust mit reiner Hewitt-Nährlösung auf 50 ml ergänzt. 3 Wochen nach Testbeginn wird nach einer linearen Skala von 1 bis 9 ausgewertet, wobei 1 totale Pflanzenschädigung und 9 unbeeinträchtigter Gesundheitszustand bedeuten. Die parallel angewandte Kontroll-Lösung enthält keinen Antidote-Zusatz.

Man verwendet:

1) 4 ppm Prometryn = 2,4-bis (Isopropylamino)-6-methylthio-s-triazin in Sorghum-Hirse der Sorte "Funk G—522".

2) 4 ppm 4-Aethylamino-6-tert.butylamino-2-chlor-s-triazin in *Weizen* der Sorte "Farnese".

3) 4 ppm $\alpha$-[4-(p-Trifluormethylphenoxy)-phenoxy]-propionsäure-n-butoxy-äthylester in *Gerste* der Sorte "Mazurka".

4) 5 ppm Metolachlor = N-(1-Methyl-2-methoxy-äthyl)-N-chloracetyl-2-äthyl-6-methylanilin in *Sorghum-Hirse* der Sorte "Funk G—522".

5) 1 ppm 2-Methoxy-4,6-bis-(5-methoxy-propylamino)-s-triazin in Zuckerrüben der Sorte "Kleinwanzleben".

Mit den Verbindungen der Formel (I) erhält man folgendes Resultat:

| Testvariante | Verbindung Nr. | Note des Herbizideinflusses (ohne/mit Antidote) |
|---|---|---|
| 1 | 1 | 1/4 |
| 1 | 4 | 1/3 |
| 1 | 7 | 1/5 |
| 1 | 8 | 1/3 |
| 1 | 13 | 4/6 |
| 1 | 14 | 4/6 |
| 1 | 15 | 1/3 |
| 1 | 16 | 1/3 |
| 1 | 17 | 2/4 |
| 2 | 17 | 2/5 |
| 1 | 18 | 3/5 |
| 2 | 18 | 5/7 |
| 1 | 19 | 3/5 |
| 2 | 19 | 5/7 |
| 5 | 21 | 1/5 |
| 1 | 22 | 2/4 |
| 2 | 22 | 3/5 |
| 1 | 24 | 1/5 |
| 1 | 25 | 1/5 |
| 1 | 26 | 1/4 |
| 1 | 27 | 1/3 |

## Beispiel 11

Nachauflauf-Antidote-Test in Nährlösung

*Allgemeine Methodik*

Man füllt kleine Plastik-Blumentöpfe (oberer ϕ 5 cm), die an der Unterseite durchlöchert sind, mit gekörntem Zonolith® und sät den Kultursamen ein. Dann wird der Topf in einen zweiten durchsichtigen Plastik-Blumentopf (oberer ϕ 7 cm) gestellt. In dem sich 50 ml Wasser befinden, das kapillar aufsteigt und den Samen benetzt. Ab 5. Tag wird der laufende Wasserverlust mit Hewitt-Nährlösung ausgeglichen. Ab 15. Tag, wenn sich die Kulturpflanze im 1 1/2- bis 2-Blattstadium befindet, wird in die wieder auf 50 ml ergänzte Nährlösung 10 ppm des zu prüfenden Antidotes + die unten angegebene Menge Herbizid zugegeben. Ab 16. Tag wird der Flüssigkeitsverlust wieder durch reine Hewitt-Nährlösung ausgeglichen. Während der gesamten Testdauer beträgt die Temperatur 20 bis 23 °C bei einer relativen Luftfeuchtigkeit von 60 bis 70 %. 3 Wochen nach Zugabe des Herbizids und des Antidotes erfolgt die Auswertung nach einer linearen Skala von 1 bis 9, wobei 1 totale Pflanzenschädigung und 9 unbeeinträchtigter Gesundheitszustand bedeuten.

Testvarianten:

1) 15 ppm $\alpha$-[4-(3,5-Dichlorpyridyl-2-oxy)-phenoxy]-propionsäure-propargylthioloester in *Weizen* der Sorte "Zenith".

2) 4 ppm 4-Aethylamino-6-tert.butylamino-2-chlor-s-triazin in *Weizen* Sorte "Zenith".

3) 2 ppm α-[4-(p-Trifluormethylphenoxy)-phenoxy]-propionsäure-n-butoxyäthylester in *Mais* der Sorte "Orla".

4) 8 ppm α-[4-(p-Trifluormethylphenoxy)-phenoxy]-propionsäure-n-butoxyäthylester in *Sorghum-Hirse* der Sorte "Funk G—522".

5) 4 ppm Prometryn = 2,4-bis(Isopropylamino)-6-methylthio-s-triazin in *Sorghum-Hirse* der Sorte "Funk G—522".

6) 8 ppm α-[4-(3,5-Dichlorpyridyl-2-oxy)-phenoxy]-propionsäuremethylester in *Weizen* der Sorte "Zenith".

Verbindungen der Formel (I) erzielen bei diesen Versuchen gute Antidot-Wirkung. Als Beispiele seien die folgenden Ergebnisse genannt:

| Testvariante | Verbindung Nr. | Note des Herbizideinflusses (ohne/mit Antidote) |
|---|---|---|
| 2 | 1 | 1/4 |
| 1 | 2 | 4/6 |
| 2 | 4 | 1/4 |
| 5 | 4 | 1/4 |
| 2 | 5 | 1/4 |
| 5 | 5 | 1/5 |
| 2 | 12 | 1/3 |
| 5 | 13 | 1/3 |
| 2 | 15 | 1/4 |
| 5 | 15 | 1/4 |
| 2 | 16 | 1/3 |
| 5 | 16 | 1/5 |
| 5 | 19 | 2/5 |
| 2 | 24 | 1/3 |
| 5 | 24 | 1/3 |
| 2 | 25 | 1/4 |
| 5 | 25 | 1/4 |
| 2 | 26 | 1/3 |
| 2 | 27 | 1/4 |
| 5 | 27 | 1/4 |

## Beispiel 12

Antidote-Test Samenquellung (Seed Soaking)

Reissamen der Sorte IR 8 werden während 48 Stunden mit Lösungen der Testsubstanzen von 10, 100 oder 1000 ppm getränkt. Anschliessend werden die Samen etwa 2 Stunden trocknen gelassen, bis sie nicht mehr kleben. Rechteckige Plastiktöpfe (8 x 8 cm, 10 cm Höhe) werden bis 2 cm unter den Rand mit sandigem Lehm gefüllt. 4 g Samen werden pro Topf gesät und nur ganz schwach gedeckt (etwa Durchmesser des Samenkorns). Die Erde wird in einem feuchten (nicht sumpfigen) Zustand gehalten. Dann wird das Herbizid N-(1-Methyl-2-methoxyäthyl)-N-chloracetyl-2-äthyl-6-methylanilin in verdünnter Lösung und in einer Menge appliziert, die umgerechnet 1,5 kg AS/ha entspricht. 7 und 18 Tage nach dem Verpflanzen wird nach einer linearen Skala von 1 bis 9 ausgewertet, wobei 1 totale Pflanzenschädigung und 9 unbeeinträchtigter Gesundheitszustand bedeuten.

Verbindungen der Formel (I) zeigen in diesem Versuch gute Antidote-Wirkung. Als Beispiele seien die folgenden Resultate genannt (alle bei 100 ppm).

| Verbindung Nr. | Note des Herbizideinflusses (ohne/mit Antidote) |
|---|---|
| 1 | 4/7 |
| 6 | 4/6 |
| 7 | 4/7 |
| 11 | 4/7 |
| 12 | 4/7 |
| 14 | 2/5 |
| 16 | 4/7 |
| 17 | 3/5 |
| 19 | 2/4 |
| 26 | 4/6 |

Beispiel 13

Antidote-Test Wurzelbehandlung (Root dipping)

Reispflanzen der Sorte IR 8 werden bis zum 1 1/2—2 Blattstadium in Erde herangezogen und dann flüchtig ausgewaschen. Die Pflanzen werden dann büschelweise nur mit den Wurzeln während 45 Minuten in eine Schale mit Lösungen der Testsubstanz von 10, 100 oder 1000 ppm getaucht. Anschliessend werden sie in Container 47 cm lang, 29 cm breit und 24 cm hoch) in sandigen Lehm verpflanzt. Die Bodenoberfläche wird mit Wasser von 1 1/2 bis 2 cm Höhe beschichtet. Einen Tag nach dem Verpflanzen wird das Herbizid N-n-Propoxyäthyl-N-chloracetyl-2,6-diäthylanilin in verdünnter Lösung direkt ins Wasser in einer Menge pipettiert, die umgerechnet 1,5 kg AS/ha entspricht. 7 und 18 Tage nach dem Verpflanzen wird nach einer linearen Skala von 1 bis 9 ausgewertet, wobei 1 totale Pflanzenschädigung und 9 unbeeinträchtigter Gesundheitszustand bedeuten.

Verbindungen der Formel (I) zeigen in diesem Versuch gute Antidote-Wirkung. Als Beispiele seien die folgenden Resultate genannt (bei 10 ppm).

| Verbindung Nr. | Note des Herbizideinflusses (ohne/mit Antidote) |
|---|---|
| 3 | 3/6 |
| 6 | 3/5 |
| 27 | 3/6 |

**Patentansprüche für die Vertragsstaaten: BE CH DE FR GB IT NL**

1. Mittel zum Schutz von Kulturpflanzen vor der phytotoxischen Wirkung von Herbiziden, dadurch gekennzeichnet, dass es als antidot-Komponente ein Oxim-Derivat der Formel (I) enthält,

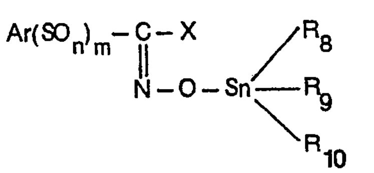

(I)

worin n = 0, 1 oder 2 und m = 0 oder 1 ist, X Cyano oder einen Carbonsäureniederalkylester bedeutet, Ar für Phenyl, durch 1 bis 4 Niederalkylgruppen, 1 bis 4 Niederalkoxygruppen oder 1 bis 4 Halogenatome substituiertes Phenyl, Naphthyl oder, wenn m = 0 ist, auch für Aminocarbonyl (—$CONH_2$) steht und $R_8$, $R_9$ und $R_{10}$ gleich sind und $C_1$—$C_4$-Alkyl, Benzyl oder Phenyl bedeuten, mit der Massgabe, dass, wenn Ar für Phenyl steht, X Cyano und i) n = 2 und m = 1 sind und $R_8$, $R_9$ und $R_{10}$ n-Butyl bedeuten oder ii) n und m = 0 sind und $R_8$, $R_9$ und $R_{10}$ Phenyl bedeuten.

2. Mittel gemäss Anspruch 1, dadurch gekennzeichnet, dass in der Formel I X Cyano bedeutet, Ar für durch 1 bis 4 Niederalkylgruppen, 1 bis 4 Niederalkoxygruppen oder 1 bis 4 Halogenatome substituiertes Phenyl oder, wenn m = 0 ist, auch für Aminocarbonyl steht und $R_8$, $R_9$ und $R_{10}$ gleich sind und n-Butyl oder Phenyl bedeuten.

3. Mittel gemäss Anspruch 1, dadurch gekennzeichnet, dass es als Antidot-Komponente die Verbindung

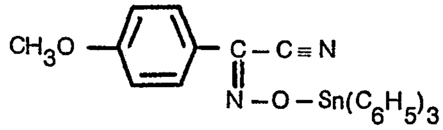

enthält.

4. Mittel gemäss Anspruch 1, dadurch gekennzeichnet, dass es als Antidot-Komponente die Verbindung

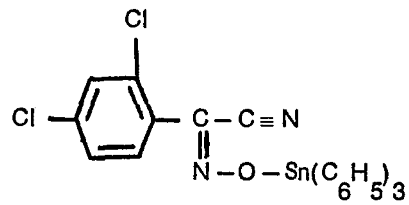

enthält.

5. Mittel gemäss Anspruch 1, dadurch gekennzeichnet, dass es als Antidot-Komponente die Verbindung

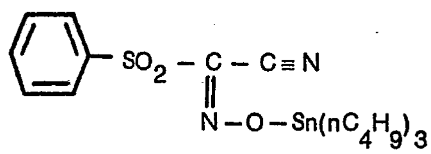

enthält.

6. Mittel gemäss Anspruch 1, dadurch gekennzeichnet, dass es als Antidot-Komponente die Verbindung

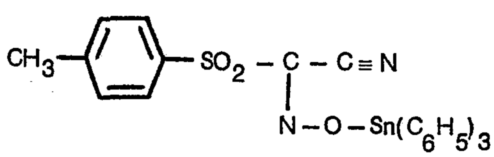

enthält.

7. Antagonistisches Mittel gemäss einem der Ansprüche 1 bis 6, dadurch gekennzeichnet, dass es ein Oxim-Derivat der Formel I und ein Herbizid im Gewichtsverhältnis zwischen 1:100 bis 5:1 enthält.

8. Mittel gemäss Anspruch 7, dadurch gekennzeichnet, dass es

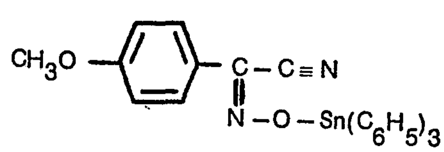

und

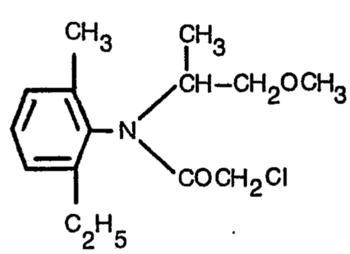

enthält.

9. Mittel gemäss Anspruch 7, dadurch gekennzeichnet, dass es

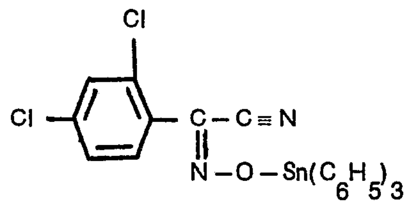

und

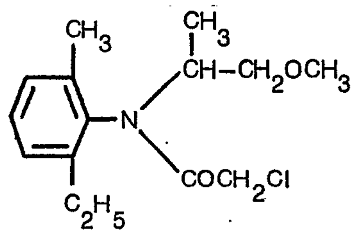

enthält.

10. Mittel gemäss Anspruch 7, dadurch gekennzeichnet, dass es

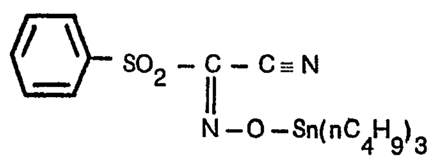

und

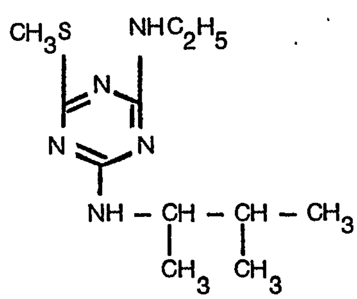

enthält.

11. Mittel gemäss Anspruch 7, dadurch gekennzeichnet, dass es

a)

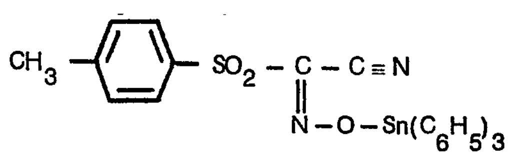

und

b)

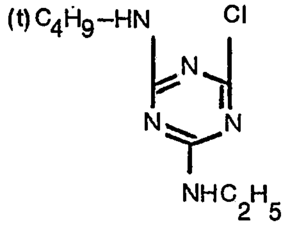

oder

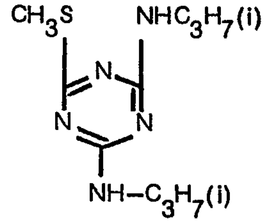

enthält.

12. Mittel gemäss Anspruch 7, dadurch gekennzeichnet, dass es

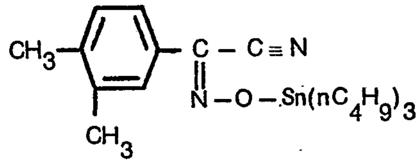

und

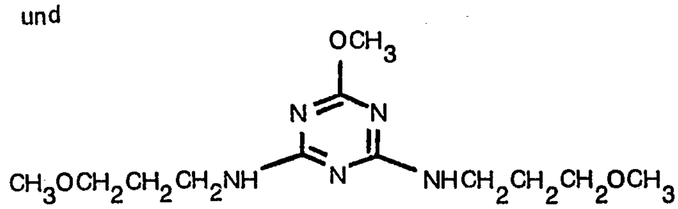

enthält.

13. Oxim-Derivat der Formel (I)

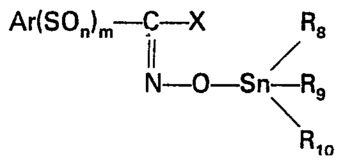

(I)

worin $n = 0$, 1 oder 2 und $m = 0$ oder 1 ist, X Cyano oder einen Carbonsäureniederalkylester bedeutet, Ar für Phenyl, durch 1 bis 4 Niederalkylgruppen, 1 bis 4 Niederalkoxygruppen oder 1 bis 4 Halogenatome substituiertes Phenyl, Naphthyl oder, wenn $m = 0$ ist, auch für Aminocarbonyl ($-CONH_2$) steht und $R_8$, $R_9$ und $R_{10}$ gleich sind und $C_1$—$C_4$-Alkyl, Benzyl oder Phenyl bedeuten, mit der Massgabe, dass, wenn Ar für Phenyl steht, X Cyano und i) $n = 2$ und $m = 1$ sind und $R_8$, $R_9$ und $R_{10}$ n-Butyl bedeuten oder ii) n und $m = 0$ sind und $R_8$, $R_9$ und $R_{10}$ Phenyl bedeuten.

14. Oxim-Derivat gemäss Anspruch 13, dadurch gekennzeichnet, dass in der Formel I X Cyano bedeutet, Ar für durch 1 bis 4 Niederalkylgruppen, 1 bis 4 Niederalkoxygruppen oder 1 bis 4 Halogenatome substituiertes Phenyl oder, wenn $m = 0$ ist, auch für Aminocarbonyl steht und $R_8$, $R_9$ und $R_{10}$ gleich sind und n-Butyl oder Phenyl bedeuten.

15. Verbindung gemäss Anspruch 13 der Formel

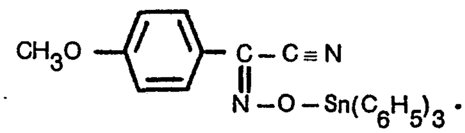

16. Verbindung gemäss Anspruch 13 der Formel

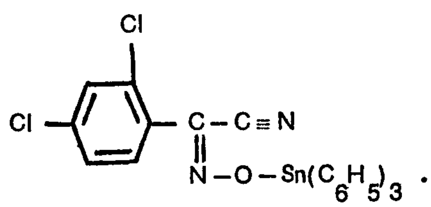

17. Verbindung gemäss Anspruch 13 der Formel

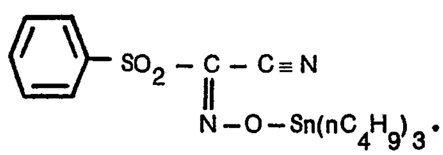

18. Verbindung gemäss Anspruch 13 der Formel

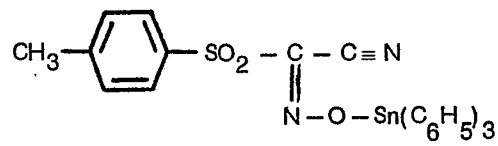

19. Verfahren zum Schutz von Kulturpflanzen vor der phytotoxischen Wirkung von Herbiziden, gekennzeichnet durch Applikation eines Oxim-Derivats gemäss einem der Ansprüche 13 bis 18.

20. Verfahren zum Schutz von Kulturpflanzen vor der phytotoxischen Wirkung von Herbiziden, gekennzeichnet durch Applikation eines Mittels gemäss einem der Ansprüche 7 bis 12.

21. Verfahren zur Herstellung von Verbindungen der Formel I gemäss Anspruch 13, dadurch gekennzeichnet, dass man eine Verbindung der Formel (II)

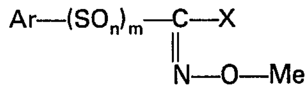

(II)

mit dem gewünschten Zinnhalogenid der Formel (III)

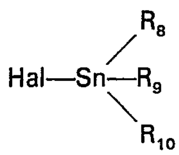

(III)

umsetzt, wobei Ar, $R_8$, $R_9$, $R_{10}$, X, m und n die unter Formel (I) im Anspruch 13 angegebenen Bedeutungen haben, Me für Wasserstoff oder ein Kation, vorzugsweise das Kation eines Alkali- oder Erdalkalimetalls steht und Hal Halogen, vorzugsweise Chlor oder Brom bedeutet.

**Patentansprüche für den Vertragsstaat: AT**

1. Mittel zum Schutz von Kulturpflanzen vor der phytotoxischen Wirkung von herbiziden, dadurch gekennzeichnet, dass es als Antidot-Komponente ein Oxim-Derivat der Formel (I) enthält,

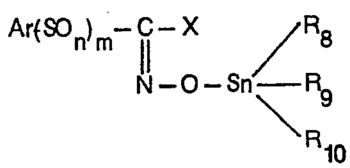

(I)

worin n = 0, 1 oder 2 und m = 0 oder 1 ist, X Cyano oder einen Carbonsäureniederalkylester bedeutet, Ar für Phenyl, durch 1 bis 4 Niederalkylgruppen, 1 bis 4 Niederalkoxygruppen oder 1 bis 4 Halogenatome substituiertes Phenyl, Naphthyl oder, wenn m = 0 ist, auch für Aminocarbonyl ($—CONH_2$) steht und $R_8$, $R_9$ und $R_{10}$ gleich sind und $C_1$—$C_4$-Alkyl, Benzyl oder Phenyl bedeuten, mit der Massgabe, dass, wenn Ar für Phenyl steht, X Cyano und i) n = 2 und m = 1 sind und $R_8$, $R_9$ und $R_{10}$ n-Butyl bedeuten oder ii) n und m = 0 sind und $R_8$, $R_9$ und $R_{10}$ Phenyl bedeuten.

2. Mittel gemäss Anspruch 1, dadurch gekennzeichnet, dass in der Formel I X Cyano bedeutet, Ar für durch 1 bis 4 Niederalkylgruppen, 1 bis 4 Niederalkoxygruppen oder 1 bis 4 Halogenatome substituiertes Phenyl oder, wenn m = 0 ist, auch für Aminocarbonyl steht und $R_8$, $R_9$ und $R_{10}$ gleich sind und n-Butyl oder Phenyl bedeuten.

3. Mittel gemäss Anspruch 1, dadurch gekennzeichnet, dass es als Antidot-Komponente die Verbindung

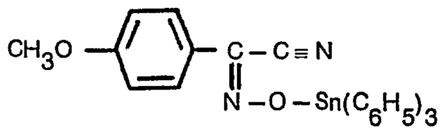

enthält.

4. Mittel gemäss Anspruch 1, dadurch gekennzeichnet, dass es als Antidot-Komponente die Verbindung

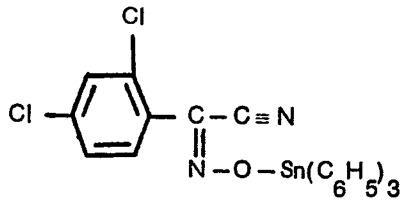

enthält.

5. Mittel gemäss Anspruch 1, dadurch gekennzeichnet, dass es als Antidot-Komponente die Verbindung

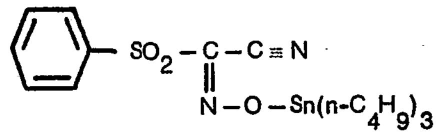

enthält.

6. Mittel gemäss Anspruch 1, dadurch gekennzeichnet, dass es als Antidot-Komponente die Verbindung

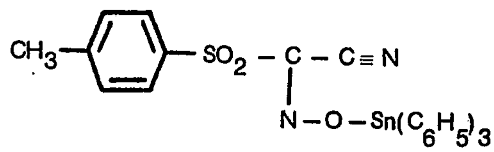

enthält.

7. Antagonistisches Mittel gemäss einem der Ansprüche 1 bis 6, dadurch gekennzeichnet, dass es ein Oxim-Derivat der Formel I und ein Herbizid im Gewichtsverhältnis zwischen 1:100 bis 5:1 enthält.

8. Mittel gemäss Anspruch 7, dadurch gekennzeichnet, dass es

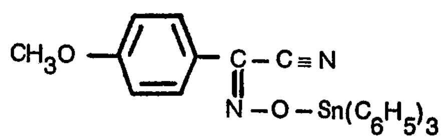

und

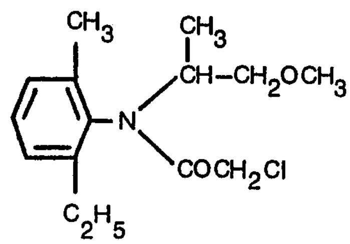

enthält.

9. Mittel gemäss Anspruch 7, dadurch gekennzeichnet, dass es

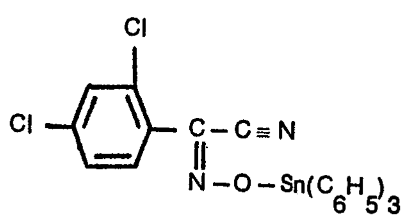

und

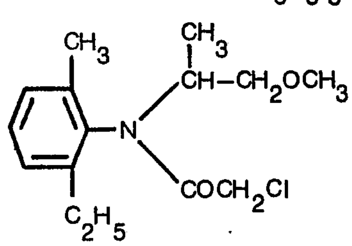

enthält.

10. Mittel gemäss Anspruch 7, dadurch gekennzeichnet, dass es

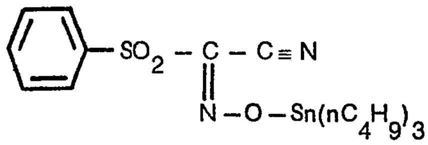

und

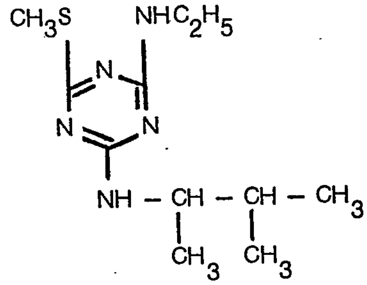

enthält.

11. Mittel gemäss Anspruch 7, dadurch gekennzeichnet, dass es

a)

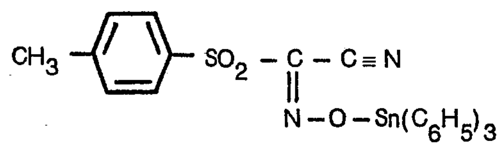

und

b)

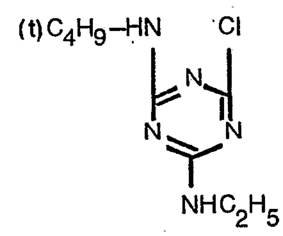

oder

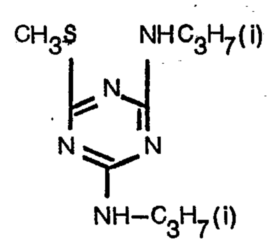

enthält.

12. Mittel gemäss Anspruch 7, dadurch gekennzeichnet, dass es

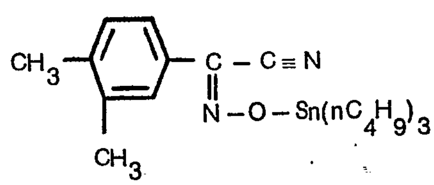

und

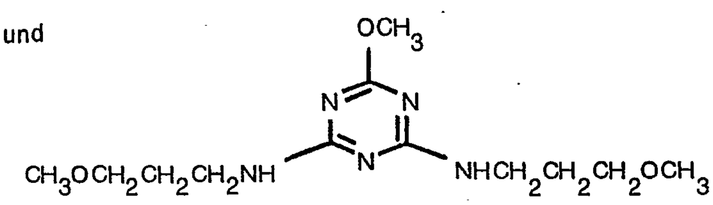

enthält.

13. Verfahren zur Herstellung von Verbindungen der Formel I gemäss Anspruch 1, dadurch gekennzeichnet, dass man eine Verbindung der Formel (II)

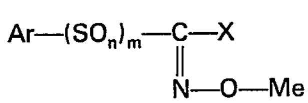

(II)

mit dem gewünschten Zinnhalogenid der Formel (III)

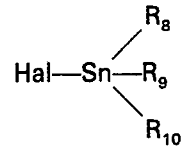

(III)

umsetzt, wobei Ar, $R_8$, $R_9$, $R_{10}$, X, m und n die unter Formel (I) im Anspruch 1 angegebenen Bedeutungen haben, Me für Wasserstoff oder ein Kation, vorzugsweise das Kation eines Alkali- oder Erdalkalimetalls steht und Hal Halogen, vorzugsweise Chlor oder Brom bedeutet.

14. Verfahren gemäß Anspruch 13, dadurch gekennzeichnet, daß man ein Oxim-Derivat der Formel (I)

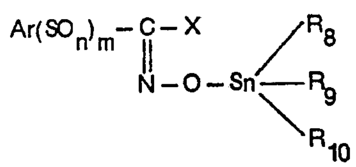

(I)

worin n = 0, 1 oder 2 und m = 0 oder 1 ist, X Cyano oder einen Carbonsäureniederalkylester bedeutet, Ar für Phenyl, durch 1 bis 4 Niederalkylgruppen, 1 bis 4 Niederalkoxygruppen oder 1 bis 4 Halogenatome substituiertes Phenyl, Naphthyl oder, wenn m = 0 ist, auch für Aminocarbonyl (—$CONH_2$) steht und $R_8$, $R_9$ und $R_{10}$ gleich sind und $C_1$—$C_4$-Alkyl, Benzyl oder Phenyl bedeuten, mit der Massgabe, dass, wenn Ar für Phenyl steht, X Cyano und i) n = 2 und m = 1 sind und $R_8$, $R_9$ und $R_{10}$ n-Butyl bedeuten oder ii) n und m < 0 sind und $R_8$, $R_9$ und $R_{10}$ Phenyl bedeuten, herstellt.

15. Verfahren gemäss Anspruch 13 oder 14, dadurch gekennzeichnet, dass in der Formel I X Cyano bedeutet, Ar für durch 1 bis 4 Niederalkylgruppen, 1 bis 4 Niederalkoxygruppen oder 1 bis 4 Halogenatome substituiertes Phenyl oder, wenn m = 0 ist, auch für Aminocarbonyl steht und $R_8$, $R_9$ und $R_{10}$ gleich sind und n-Butyl oder Phenyl bedeuten.

16. Verfahren gemäß Anspruch 13, dadurch gekennzeichnet, daß man eine Verbindung der Formel

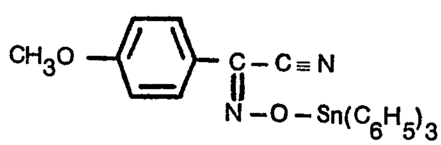

herstellt.

17. Verfahren gemäß Anspruch 13, dadurch gekennzeichnet, daß man eine Verbindung der Formel

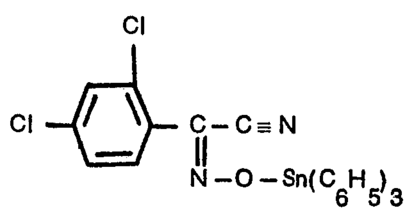

herstellt.

18. Verfahren gemäß Anspruch 13, dadurch gekennzeichnet, daß man eine Verbindung der Formel

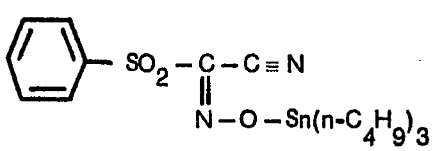

herstellt.

19. Verfahren gemäß Anspruch 13, dadurch gekennzeichnet, daß man eine Verbindung der Formel

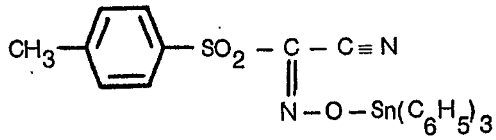

herstellt.

20. Verfahren zum Schutz von Kulturpflanzen vor der phytotoxischen Wirkung von Herbiziden, gekennzeichnet durch Applikation eines Oxim-Derivats gemäß einer der in den Ansprüchen 13 bis 19 dargestellten Formeln.

21. Verfahren zum Schutz von Kulturpflanzen vor der phytotoxischen Wirkung von Herbiziden, gekennzeichnet durch Applikation eines Mittels gemäss einem der Ansprüche 7 bis 12.

**Claims for the Contracting States: BE CH DE FR GB IT NL**

1. A composition for protecting cultivated plants from the phytotoxic action of herbicides, which composition contains, as antidote component, an oxime derivative of the formula I

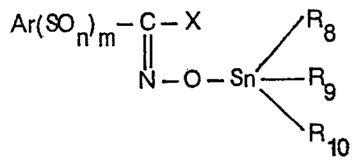

(I)

wherein n is 0, 1 or 2 and m is 0 or 1; X is cyano or a carboxylic acid lower alkyl radical, Ar is phenyl, phenyl substituted by 1 to 4 lower alkyl groups, 1 to 4 lower alkoxy groups or 1 to 4 halogen atoms, naphthyl or, if m is 0, is also aminocarbonyl ($—CONH_2$), and $R_8$, $R_9$ and $R_{10}$ are the same and are $C_1—C_4$alkyl, benzyl or phenyl, with the proviso that, if Ar is phenyl, X is cyano and i) n is 2 and m is 1 and $R_8$, $R_9$ and $R_{10}$ are n-butyl, or ii) n and m are 0 and $R_8$, $R_9$ and $R_{10}$ are phenyl.

2. A composition according to claim 1, wherein X is cyano, Ar is phenyl substituted by 1 to 4 lower alkyl groups, 1 to 4 lower alkoxy groups or 1 to 4 halogen atoms or, if m is 0, is also aminocarbonyl and $R_8$, $R_9$ and $R_{10}$ are the same and are n-butyl or phenyl.

3. A composition according to claim 1, which contains the compound of the formula

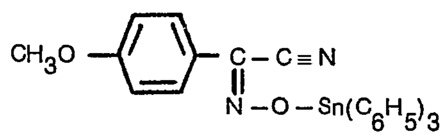

as antidote component.

4. A composition according to claim 1, which contains the compound of the formula

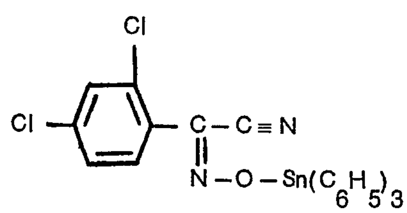

as antidote component.

5. A composition according to claim 1, which contains the compound of the formula

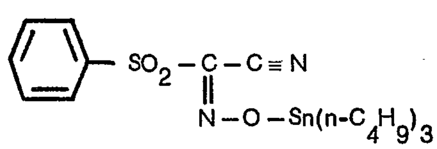

or

as antidote component.

6. A composition according to claim 1, which contains the compound of the formula

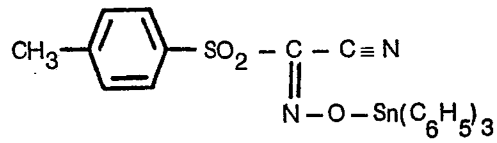

as antidote component.

7. An antagonistic composition according to any one of claims 1 to 6, which contains an oxime derivative of the formula I and a herbicide in the weight ratio from 1:100 to 5:1.

8. A composition according to claim 7, which contains

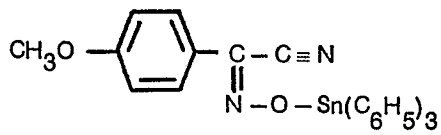

and

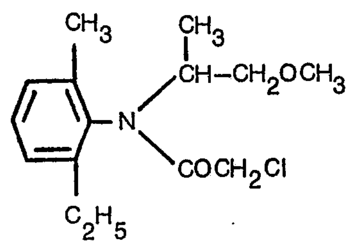

9. A composition according to claim 7, which contains

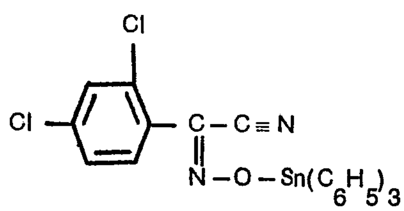

and

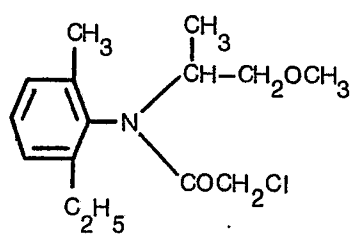

10. A composition according to claim 7, which contains

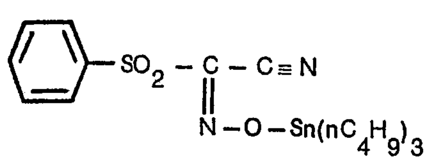

and

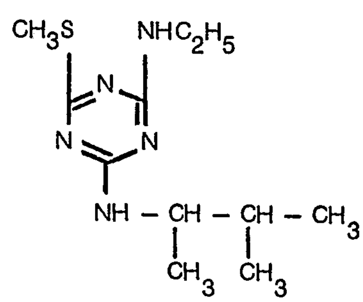

11. A compound according to claim 7, which contains

a) 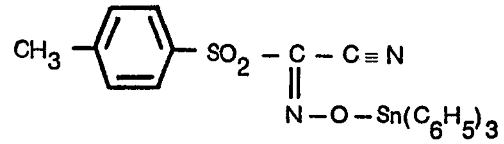

and

b) 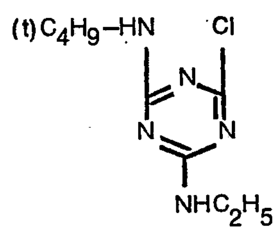 or 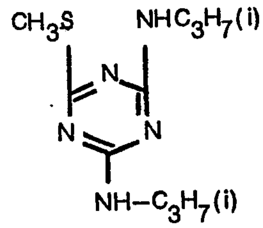

12. A compound according to claim 7, which contains

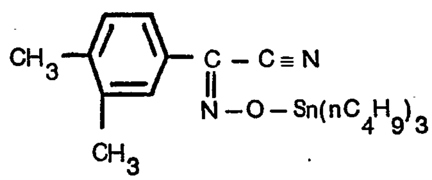

and 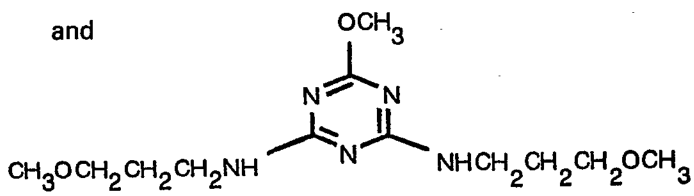

13. An oxime derivative of the formula I

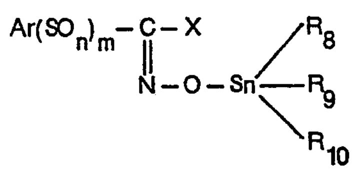 (I)

wherein n is 0, 1 or 2 and m is 0 or 1; X is cyano or a carboxylic acid lower alkyl radical, Ar is phenyl, phenyl substituted by 1 to 4 lower alkyl groups, 1 to 4 lower alkoxy groups or 1 to 4 halogen atoms, naphthyl or, if m is 0, is also aminocarbonyl (—$CONH_2$), and $R_8$, $R_9$ and $R_{10}$ are the same and are $C_1$—$C_4$alkyl, benzyl or phenyl, with the proviso that, if Ar is phenyl, X is cyano and i) n is 2 and m is 1 and $R_8$, $R_9$ and $R_{10}$ are n-butyl, or ii) n and m are 0 and $R_8$, $R_9$ and $R_{10}$ are phenyl.

14. An oxime derivative according to claim 13, wherein X is cyano, Ar is phenyl substituted by 1 to 4 lower alkyl groups, 1 to 4 lower alkoxy groups or 1 to 4 halogen atoms or, if m is 0, is also aminocarbonyl and $R_8$, $R_9$ and $R_{10}$ are the same and are n-butyl or phenyl.

15. A compound according to claim 13 of the formula

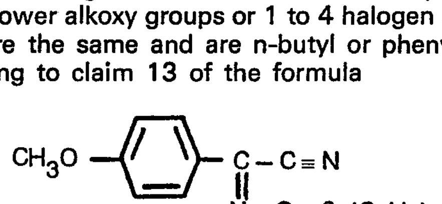

16. A compound according to claim 13 of the formula

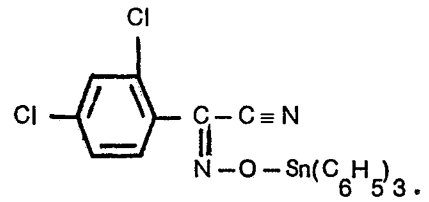

17. A compound according to claim 13 of the formula

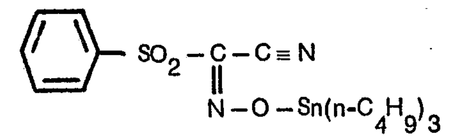

18. A compound according to claim 13 of the formula

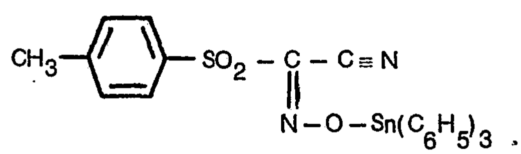

19. A method of protecting cultivated plants from the phytotoxic action of herbicides, which comprises applying thereto an oxime derivative according to any one of claims 13 to 18.

20. A method of protecting cultivated plants from the phytotoxic action of herbicides, which comprises applying thereto a composition according to any one of claims 7 to 12.

21. A process for the manufacture of a compound of the formula I according to claim 13, which comprises reacting a compound of the formula (II)

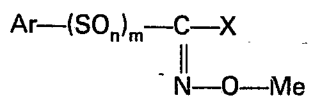

(II)

with the desired tin halide of the formula (III)

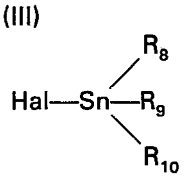

(III)

wherein Ar, $R_8$, $R_9$, $R_{10}$, X, m and n are as defined in formula (I) in claim 13, Me is hydrogen or a cation, preferably the cation of an alkali metal or alkaline earth metal and Hal is halogen, preferably chlorine or bromine.

**Claims for the Contracting State: AT**

1. A composition for protecting cultivated plants from the phytotoxic action of herbicides, which composition contains, as antidote component, an oxime derivative of the formula I

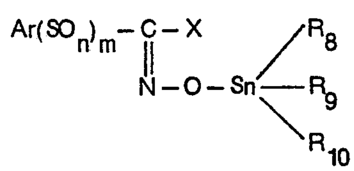

(I)

wherein n is 0, 1 or 2 and m is 0 or 1; X is cyano or a carboxylic acid lower alkyl radical, Ar is phenyl, phenyl substituted by 1 to 4 lower alkyl groups, 1 to 4 lower alkoxy groups or 1 to 4 halogen atoms, naphthyl or, if m is 0, is also aminocarbonyl ($-CONH_2$), and $R_8$, $R_9$ and $R_{10}$ are the same and are $C_1$—$C_4$alkyl, benzyl or phenyl, with the proviso that, if Ar is phenyl, X is cyano and i) n is 2 and m is 1 and $R_8$, $R_9$ and $R_{10}$ are n-butyl, or ii) n and m are 0 and $R_8$, $R_9$ and $R_{10}$ are phenyl.

2. A composition according to claim 1, wherein X is cyano, Ar is phenyl substituted by 1 to 4 lower alkyl groups, 1 to 4 lower alkoxy groups or 1 to 4 halogen atoms or, if m is 0, is also aminocarbonyl and $R_8$, $R_9$ and $R_{10}$ are the same and are n-butyl or phenyl.

3. A composition according to claim 1, which contains the compound of the formula

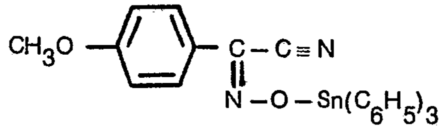

as antidote component.

4. A composition according to claim 1, which contains the compound of the formula

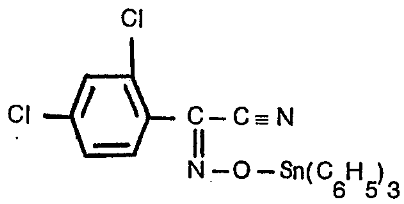

as antidote component.

5. A composition according to claim 1, which contains the compound of the formula

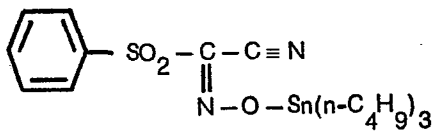

as antidote component.

6. A composition according to claim 1, which contains the compound of the formula

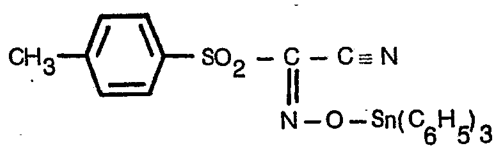

as antidote component.

7. An antagonistic composition according to any one of claims 1 to 6, which contains an oxime derivative of the formula I and a herbicide in the weight ratio from 1:100 to 5:1.

8. A composition according to claim 7, which contains

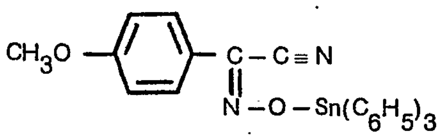

and

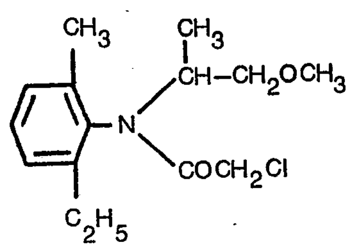

9. A composition according to claim 7, which contains

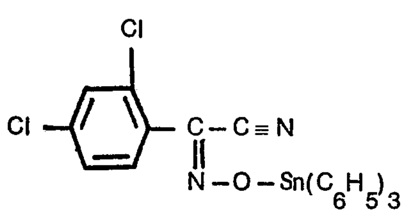

and

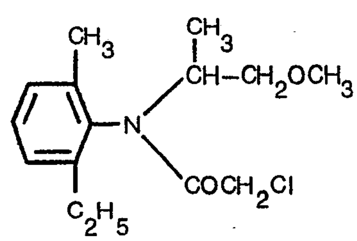

10. A composition according to claim 7, which contains

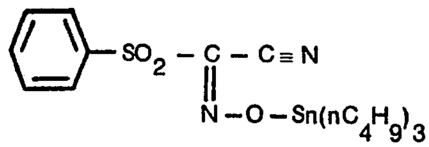

and

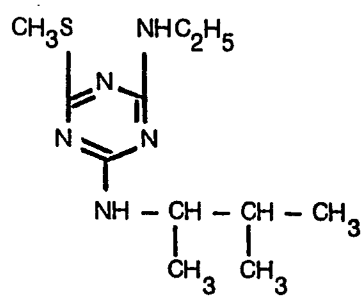

11. A compound according to claim 7, which contains

a) 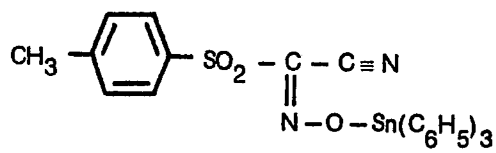

and

b) 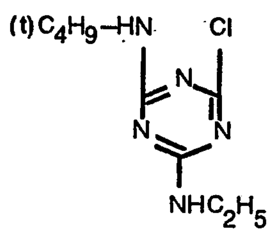

or

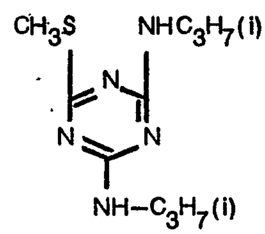

12. A compound according to claim 7, which contains

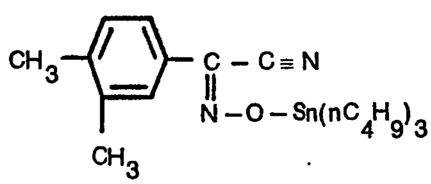

and

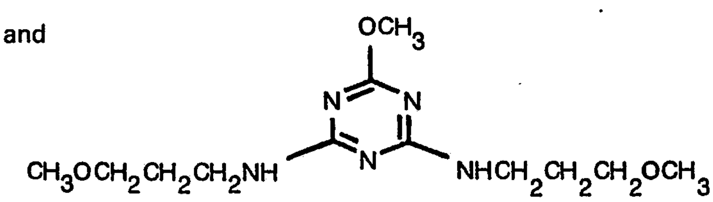

13. A process for the manufacture of a compound of the formula I according to claim 1, which comprises reacting a compound of the formula (II)

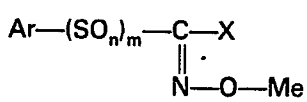

(II)

with the desired tin halide of the formula (III)

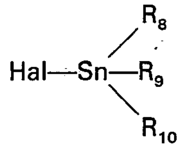

(III)

wherein Ar, $R_8$, $R_9$, $R_{10}$, X, m and n are as defined for formula (I) in claim 1, Me is hydrogen or a cation, preferably the cation of an alkali metal or alkaline earth metal and Hal is halogen, preferably chlorine or bromine.

14. A process according to claim 13 for the manufacture of an oxime derivative of the formula I

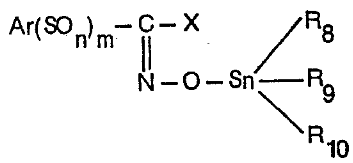

(I)

wherein n is 0, 1 or 2 and m is 0 or 1; X is cyano or a carboxylic acid lower alkyl radical, Ar is phenyl, phenyl substituted by 1 to 4 lower alkyl groups, 1 to 4 lower alkoxy groups or 1 to 4 halogen atoms, naphthyl or, if m is 0, is also aminocarbonyl ($-CONH_2$), and $R_8$, $R_9$ and $R_{10}$ are the same and are $C_1$—$C_4$alkyl, benzyl or phenyl, with the proviso that, if Ar is phenyl, X is cyano and i) n is 2 and m is 1 and $R_8$, $R_9$ and $R_{10}$ are n-butyl, or ii) n and m are 0 and $R_8$, $R_9$ and $R_{10}$ are phenyl.

15. A process according to either claim 13 or claim 14, wherein X is cyano, Ar is phenyl substituted by 1 to 4 lower alkyl groups, 1 to 4 lower alkoxy groups or 1 to 4 halogen atoms or, if m is 0, is also aminocarbonyl and $R_8$, $R_9$ and $R_{10}$ are the same and are n-butyl or phenyl.

16. A process according to claim 13 for the manufacture of a compound of the formula

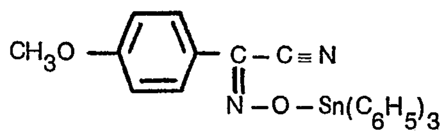

17. A process according to claim 13 for the manufacture of a compound of the formula

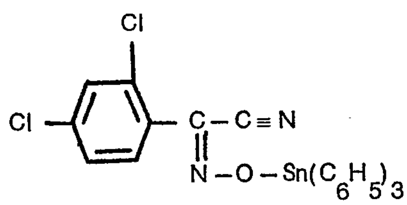

18. A process according to claim 13 for the manufacture of a compound of the formula

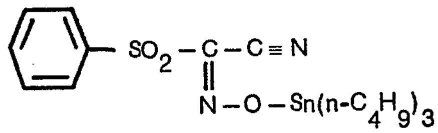

19. A process according to claim 13 for the manufacture of a compound of the formula

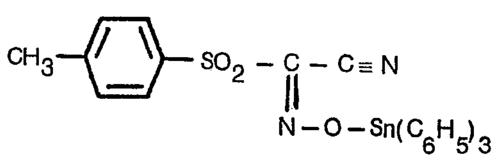

20. A method of protecting cultivated plants from the phytotoxic action of herbicides, which comprises applying thereto an oxime derivative of the formula as indicated in any one of claims 13 to 19.

21. A method of protecting cultivated plants from the phytotoxic action of herbicides, which comprises applying thereto a composition as claimed in any one of claims 7 to 12.

**Revendications pour les Etats contractants: BE CH DE FR GB IT NL**

1. Agent pour la protection de plantes de culture contre l'action phytotoxique d'herbicides, caractérisé en ce qu'il contient comme composé antidote un dérivé d'oxime de formule I

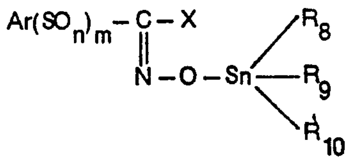

(I)

dans laquelle n = 0, 1 ou 2 et m = 0 ou 1, X représente un groupe cyano ou un ester d'alcoyle inférieur d'acide carboxylique; Ar représente un groupe phényle, ou un groupe phényle substitué par 1 à 4 groupes alcoyle inférieur, 1 à 4 groupes alcoxy inférieur ou 1 à 4 atomes d'halogène, un groupe naphtyle ou, lorsque m = 0, il représente également un groupe amino carbonyle ($—CONH_2$) et $R_8$, $R_9$ et $R_{10}$ sont identiques et représentent un groupe alcoyle en $C_1$ à $C_4$, benzyle ou phényle, avec la condition que lorsque Ar représente un groupe phényle, X représente un groupe cyano et (i) n = 2 et m = 1 et $R_8$, $R_9$ et $R_{10}$ représentent un groupe n-butyle ou (ii) n et m sont = 0 et $R_8$, $R_9$ et $R_{10}$ représentent un groupe phényle.

2. Agent selon la revendication 1, caractérisé en ce que dans la formule I, X représente un groupe cyano, Ar représente un groupe phényle substitué par 1 à 4 groupes alcoyle inférieur, 1 à 4 groupes alcoxy inférieur ou 1 à 4 atomes d'halogène ou, lorsque m = 0, également un groupe aminocarbonyle et $R_8$, $R_9$ et $R_{10}$ sont identiques et représentent un groupe n-butyle ou phényle.

3. Agent selon la revendication 1, caractérisé en ce qu'il contient comme antidote le composé de formule

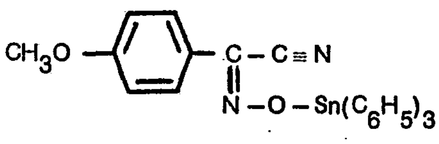

4. Agent selon la revendication 1, caractérisé en ce qu'il contient comme antidote le composé de formule

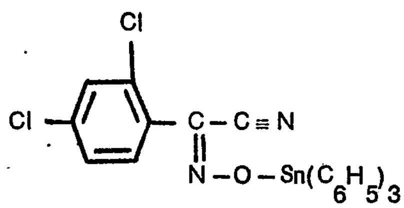

5. Agent selon la revendication 1, caractérisé en ce qu'il contient comme antidote le composé de formule

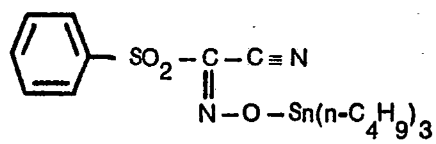

6. Agent selon la revendication 1, caractérisé en ce qu'il contient comme antidote le composé de formule

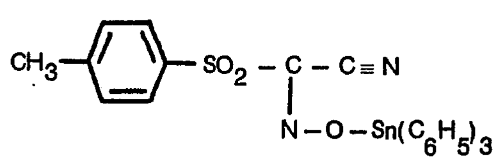

7. Agent antagoniste selon l'une des revendications 1 à 6, caractérisé en ce qu'il contient le dérivé d'oxime de formule I et un herbicide dans un rapport en poids compris entre 1:100 et 5:1.

8. Agent selon la revendication 7, caractérisé en ce qu'il contient

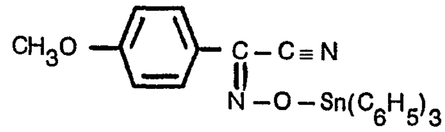

et

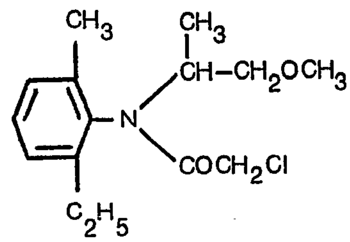

9. Agent selon la revendication 7, caractérisé en ce qu'il contient

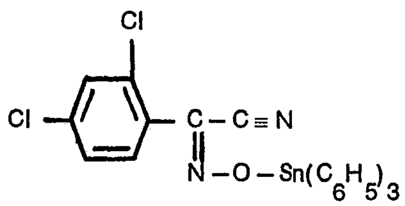

et

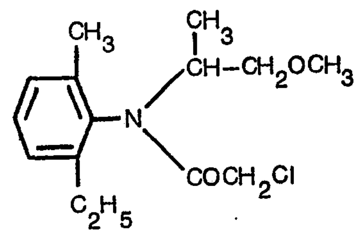

10. Agent selon la revendication 7, caractérisé en ce qu'il contient

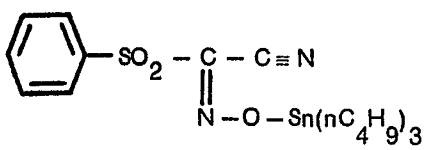

et

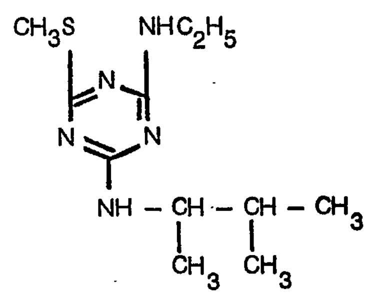

11. Agent selon la revendication 7, caractérisé en ce qu'il contient

a) 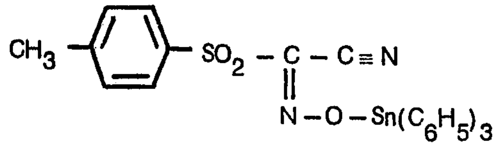

et

b) 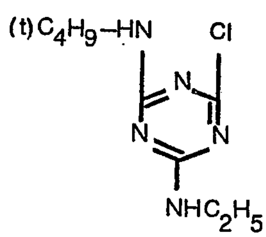

ou

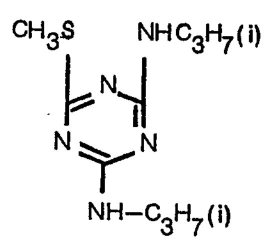

12. Agent selon la revendication 7, caractérisé en ce qu'il contient

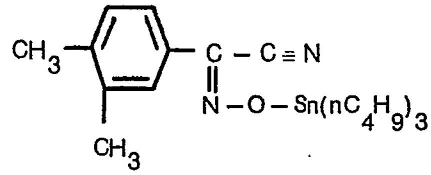

et

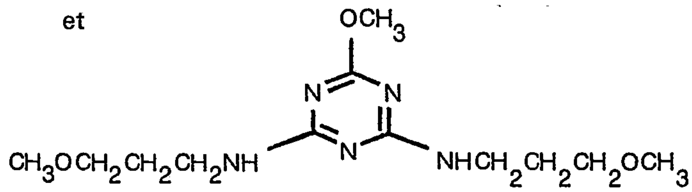

13. Dérivé d'oxime de formule (I)

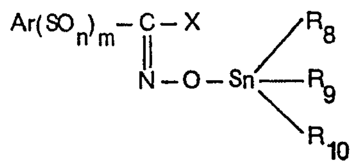

(I)

dans laquelle n = 0, 1 ou 2 et m = 0 ou 1, X représente un groupe cyano ou un ester d'alcoyle inférieur d'acide carboxylique; Ar représente un groupe phényle, ou un groupe phényle substitué par 1 à 4 groupes alcoyle inférieur, 1 à 4 groupes alcoxy inférieur ou 1 à 4 atomes d'halogène, un groupe naphtyleou, lorsque m = 0, il représente également un groupe amino carbonyle (—$CONH_2$) et $R_8$, $R_9$ et $R_{10}$ sont identiques et représentent un groupe alcoyle en $C_1$ à $C_4$, benzyle ou phényle, avec la condition que lorsque Ar représente un groupe phényle, X représente un groupe cyano et (i) n = 2 et m = 1 et $R_8$, $R_9$, $R_{10}$ représentent un groupe n-butyle ou (ii) n et m sont = 0 et $R_8$, $R_9$ et $R_{10}$ représentent un groupe phényle.

14. Dérivé d'oxime selon la revendication 13, caractérisé en ce que dans la formule I, X représente un groupe cyano, Ar représente un groupe phényle substitué par 1 à 4 groupes alcoyle inférieur, 1 à 4 groupes alcoxy inférieur ou 1 à 4 atomes de carbone, où lorsque m = 0, il représente également un groupe amino carbonyle et $R_8$, $R_9$ et $R_{10}$ sont identiques et représentent un groupe n-butyle ou phényle.

15. Composé selon la revendication 13 de formule

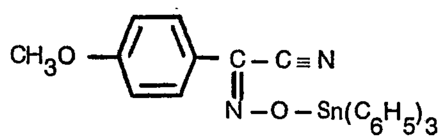

16. Composé selon la revendication 13 de formule

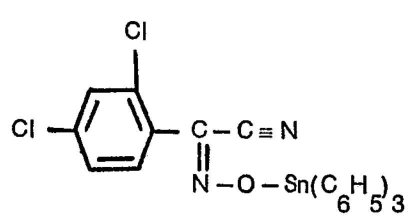

17. Composé selon la revendication 13 de formule

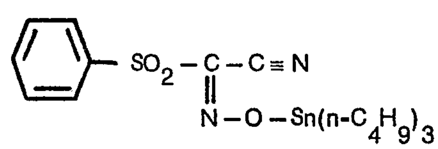

18. Composé selon la revendication 13 de formule

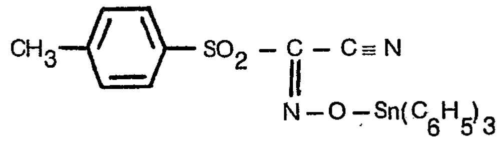

19. Procédé de protection des plantes de culture contre l'action phytotoxique d'herbicides, caractérisé par l'application d'un dérivé d'oxime selon l'une des revendication 13 à 18.

20. Procédé de protection des plantes de culture contre l'action phytotoxique d'herbicides, caractérisé par l'application d'un agent selon l'une des revendications 7 à 12.

21. Procédé de préparation de dérivés de formule I selon la revendication 13, caractérisé en ce que l'on fait réagir un composé de formule II

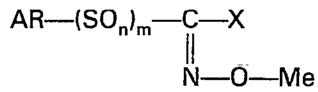

(II)

avec l'halogénure d'étain désiré de formule (III)

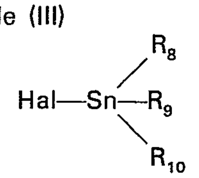

(III)

où Ar, $R_8$, $R_9$, $R_{10}$, X, m et n ont les significations données pour la formule I dans la revendication 13, Me représente de l'hydrogène ou un cation, de préférence le cation d'un métal alcalin ou alcalino-terreux et Hal représente un halogène, de préference le chlore ou le brome.

**Revendications pour l'Etat contractant: AT**

1. Agent pour la protection de plantes de culture contre l'action phytotoxique d'herbicides, caractérisé en ce qu'il contient comme composé antidote un dérivé d'oxime de formule I

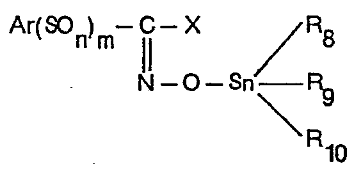

(I)

dans laquelle n = 0, 1 ou 2 et m = 0 ou 1, X représente un groupe cyano ou un ester d'alcoyle inférieur d'acide carboxylique; Ar représente un groupe phényle, ou un groupe phényle substitué par 1 à 4 groupes alcoyle inférieur, 1 à 4 groupes alcoxy inférieur ou 1 à 4 atomes d'halogène, un groupe naphtyle ou, lorsque m = 0, il représente également un groupe amino carbonyle ($-CONH_2$) et $R_8$, $R_9$ et $R_{10}$ sont identiques et représentent un groupe alcoyle en $C_1$ à $C_4$, benzyle ou phényle, avec la condition que lorsque Ar représente un groupe phényle, X représente un groupe cyano et (i) n = 2 et m = 1 et $R_8$, $R_9$ et $R_{10}$ représentent un groupe n-butyle ou (ii) n et m sont = 0 et $R_8$, $R_9$ et $R_{10}$ représentent un groupe phényle.

2. Agent selon la revendication 1, caractérisé en ce que dans la formule I, X représente un groupe cyano, Ar représente un groupe phényle substitué par 1 à 4 groupes alcoyle inférieur, 1 à 4 groupes alcoxy inférieur ou 1 à 4 atomes d'halogène ou, lorsque m = 0, également un groupe aminocarbonyle et $R_8$, $R_9$ et $R_{10}$ sont identiques et représentent un groupe n-butyle ou phényle.

3. Agent selon la revendication 1, caractérisé en ce qu'il contient comme antidote le composé de formule

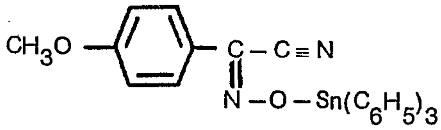

4. Agent selon la revendication 1, caractérisé en ce qu'il contient comme antidote le composé de formule

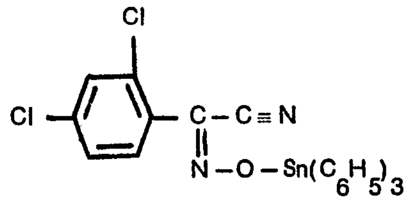

5. Agent selon la revendication 1, caractérisé en ce qu'il contient comme antidote le composé de formule

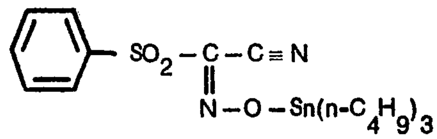

6. Agent selon la revendication 1, caractérisé en ce qu'il contient comme antidote le composé de formule

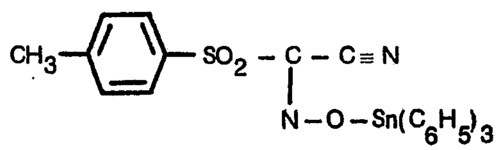

7. Agent antagoniste selon l'une des revendications 1 à 6, caractérisé en ce qu'il contient le dérivé d'oxime de formule I et un herbicide dans un rapport en poids compris entre 1:100 et 5:1.

8. Agent selon la revendication 7, caractérisé en ce qu'il contient

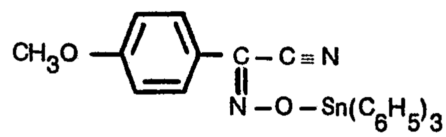

et

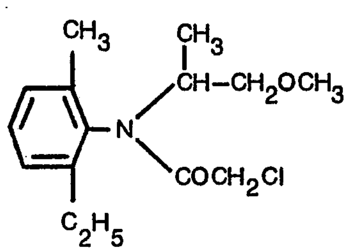

9. Agent selon la revendication 7, caractérisé en ce qu'il contient

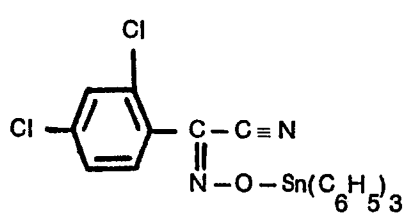

et

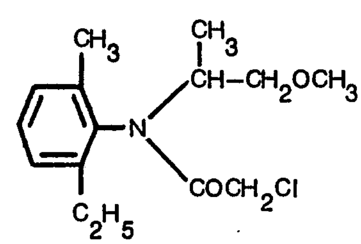

10. Agent selon la revendication 7, caractérisé en ce qu'il contient

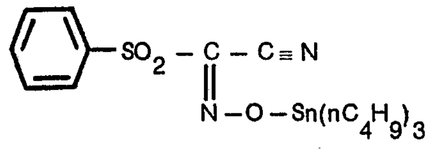

et

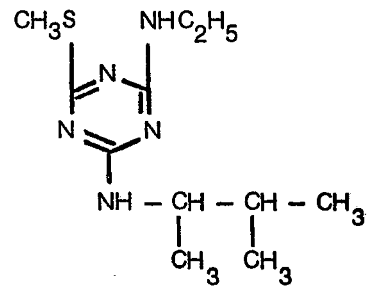

11. Agent selon la revendication 7, caractérisé en ce qu'il contient

a) 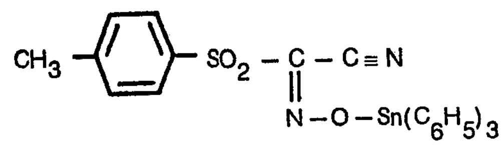

et

b) 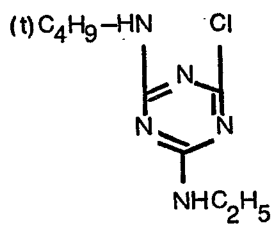

ou

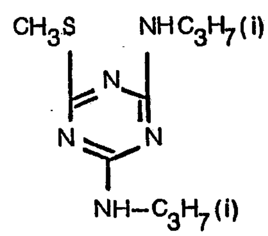

12. Agent selon la revendication 7, caractérisé en ce qu'il contient

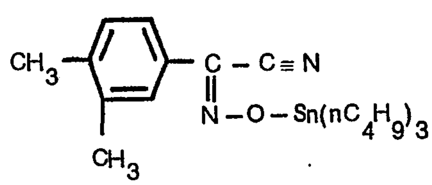

et

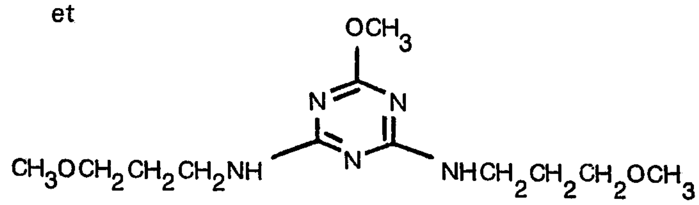

13. Procédé de préparation de dérivés de formule I selon la revendication 1, caractérisé en ce que l'on fait réagir un composé de formule II

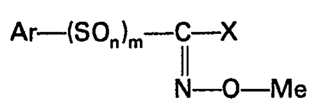

(II)

avec l'halogénure d'étain désiré de formule (III)

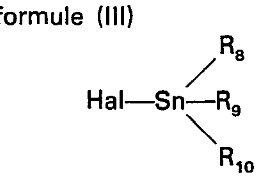

(III)

où Ar, $R_8$, $R_9$, $R_{10}$, X, m et n ont les significations données pour la formule I dans la revendication 1, Me représente de l'hydrogène ou un cation, de préférence le cation d'un métal alcalin ou alcalino-terreux

et Hal représente un halogène, de préférence le chlore oule brome.

14. Procédé selon la revendication 13, caractérisé en ce qu'on prépare un dérivé d'oxime de formule I

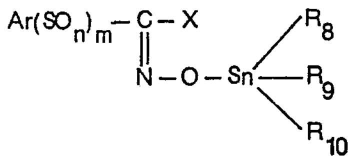

(I)

dans laquelle n = 0, 1 ou 2 et m = 0 ou 1, X représente un groupe cyano ou un ester d'alcoyle inférieur d'acide carboxylique; Ar représente un groupe phényle, ou un groupe phényle substitué par 1 à 4 groupes alcoyle inférieur, 1 à 4 groupes alcoxy inférieur ou 1 à 4 atomes d'halogène, un groupe naphtyle ou, lorsque m = 0, il représente également un groupe amino carbonyle (—$CONH_2$) et $R_8$, $R_9$ et $R_{10}$ sont identiques et représentent un groupe alcoyle en $C_1$ à $C_4$, benzyle ou phényle, avec la condition que lorsque Ar représente un groupe phényle, X représente un groupe cyano et (i) n = 2 et m = 1 et $R_8$, $R_9$ et $R_{10}$ représentent un groupe n-butyle ou (ii) n et m sont = 0 et $R_8$, $R_9$ et $R_{10}$ représentent un groupe phényle.

15. Procédé selon la revendication 13 ou 14, caractérisé en ce que dans la formule I, X représente un groupe cyano, Ar représente un groupe phényle substitué par 1 à 4 groupes alcoyl inférieur, 1 à 4 groupes alcoxy inférieur ou 1 à 4 atomes d'halogène, lorsque m = 0, il représente également un groupe aminocarbonyle et $R_8$, $R_9$ et $R_{10}$ sont identiques et représentent un groupe n-butyle ou phényle.

16. Procédé selon la revendication 13, caractérisé en ce qu'on prépare un composé de formule

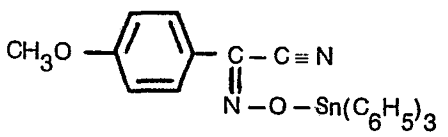

17. Procédé selon la revendication 13, caractérisé en ce qu'on prépare un composé de formule

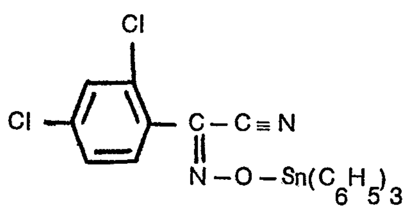

18. Procédé selon la revendication 13, caractérisé en ce qu'on prépare un composé de formule

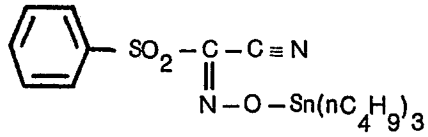

19. Procédé selon la revendication 13, caractérisé en ce qu'on prépare un composé de formule

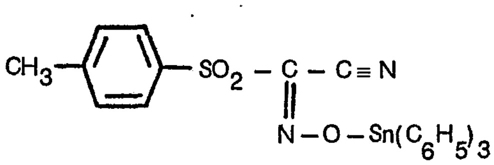

20. Procédé de protection des plantes de culture contre l'action phytotoxique d'herbicides, caractérisé par l'application d'un dérivé d'oxime selon l'une des formules données dans les revendications 13 à 19.

21. Procédé de protection des plantes de culture contre l'action phytotoxique d'herbicides, caractérisé par l'application d'un agent selon l'une des revendications 7 à 12.